# EUROPEAN PATENT APPLICATION

(11) **EP 4 650 908 A1**
(43) Date of publication of application: **19.11.2025**
(21) Application number: 24821728.3
(22) Date of filing: 12.12.2024
(51) Int. Cl.: G06F 1/16, H04M 1/23, H05K 1/14

(54) **FOLDABLE ELECTRONIC DEVICE COMPRISING FOLDABLE HOUSING**

(30) Priority: 22.03.2024 KR 20240040066; 30.04.2024 KR 20240058100
(71) Applicant: Samsung Electronics Co., Ltd, Suwon-si, Gyeonggi-do 16677 (KR)
(72) Inventor: PARK, Changi, Suwon-si Gyeonggi-do 16677 (KR); KANG, Jeongho, Suwon-si Gyeonggi-do 16677 (KR); KIM, Namwoo, Suwon-si Gyeonggi-do 16677 (KR); KIM, Minho, Suwon-si Gyeonggi-do 16677 (KR); KIM, Jihoon, Suwon-si Gyeonggi-do 16677 (KR); SONG, Minsuk, Suwon-si Gyeonggi-do 16677 (KR); AHN, Jaeuk, Suwon-si Gyeonggi-do 16677 (KR); YOON, Yeonggyu, Suwon-si Gyeonggi-do 16677 (KR); JUNG, Soli, Suwon-si Gyeonggi-do 16677 (KR); CHOI, Junyoung, Suwon-si Gyeonggi-do 16677 (KR)
(74) Representative: Gulde & Partner
(86) International application number: PCT/KR2024/096872
(87) International publication number: WO 2025/198152

(57) **Abstract**

According to an embodiment, an electronic device includes a foldable housing including first, second, and third housing parts, a flexible display, a sub-display opposite to the flexible display, a first camera module disposed in the first housing part, a first printed circuit board, at least one processor, and a key button including at least one key button disposed at a sidewall of the first housing part. In a folded state of the foldable electronic device, a front side of the third housing part faces a front side of the second housing part, and a front side of the first housing part faces a rear side of the second housing part.

## Description

### [Technical Field]

The present disclosure relates to a foldable electronic device comprising a foldable housing.

### [Background Art]

An electronic device may include a foldable housing and a flexible display for providing an enhanced user experience. The foldable housing may include a plurality of housing parts. The foldable housing may have a structure in which the plurality of housing parts may be folded or unfolded one or more times. For example, the foldable housing may include three housing parts that are rotatably coupled through two hinges. The flexible display may be at least partially deformed based on an operation of the foldable housing.

The above-described information may be provided as a related art for the purpose of helping to understand the present disclosure. No claim or determination is raised as to whether any of the above-described information can be applied as a prior art related to the present disclosure.

### [Disclosure]

### [Technical Solution]

A foldable electronic device is provided. The foldable electronic device may comprise a foldable housing. The foldable housing may include a first housing part, a second housing part, and a third housing part disposed between the first housing part and the second housing part. The foldable electronic device may comprise a first hinge assembly rotatably coupling the second housing part to the third housing part. The foldable electronic device may comprise a second hinge assembly rotatably coupling the first housing part to the third housing part and having a wider width than the first hinge assembly. The foldable electronic device may comprise a first display disposed across the first housing part, the second housing part, and the third housing part. The foldable electronic device may comprise a second display disposed in the third housing part and opposite to the first display. The foldable electronic device may comprise a first camera module disposed in a rear side of the first housing part and including image processing circuitry. The foldable electronic device may comprise a key button module including processing circuitry and at least one key button. The at least one key button may be disposed at a side wall of the first housing part. The foldable electronic device may comprise a first printed circuit board disposed in the first housing part. A folded state of the foldable electronic device may be a state in which a front side of the third housing part faces a front side of the second housing part and a front side of the first housing part faces a rear side of the second housing part.

A foldable electronic device is provided. The foldable electronic device may comprise a foldable housing. The foldable housing may include a first housing part, a second housing part, and a third housing part disposed between the first housing part and the second housing part. The foldable electronic device may comprise a first hinge assembly rotatably coupling the second housing part to the third housing part. The foldable electronic device may comprise a second hinge assembly rotatably coupling the first housing part to the third housing part and having a wider width than the first hinge assembly. The foldable electronic device may comprise a flexible display disposed in the first housing part, the second housing part, and the third housing part. The foldable electronic device may comprise a sub-display disposed in the third housing part and opposite to the flexible display. The foldable electronic device may comprise a first camera module including a deco partially exposed through a rear side of the first housing part and disposed in the first housing part. The foldable electronic device may comprise at least one processor disposed in the first housing part and operatively coupled to the flexible display, the sub-display, and the first camera module. The foldable electronic device may comprise a first battery disposed in the first housing part. The foldable electronic device may comprise a second battery disposed in the second housing part. The foldable electronic device may comprise a third battery disposed in the third housing part. A third size of the third battery may be larger than a first size of the first battery and smaller than a second size of the second battery.

### [Description of the Drawings]

FIG. 1 is a block diagram of an electronic device in a network environment according to an embodiment.
FIG. 2A illustrates a first state of an electronic device according to an embodiment.
FIG. 2B illustrates a third state of an electronic device according to an embodiment.
FIG. 3A is a plan view of a foldable electronic device in which a flexible display is omitted when the foldable electronic device is in a first state according to an embodiment.
FIG. 3B is a rear view of a foldable electronic device in which a rear cover and a sub-display are removed when the foldable electronic device is in a first state according to an embodiment.
FIG. 4A and FIG. 4B illustrate a process of changing a state of a foldable electronic device according to an embodiment.
FIG. 5A is a rear perspective view of a foldable electronic device according to an embodiment of a third state.
FIG. 5B is a front perspective view of a foldable electronic device according to an embodiment of a third state.
FIG. 6A illustrates a foldable electronic device according to a comparative example of a first state in a use environment.
FIG. 6B illustrates a foldable electronic device according to an embodiment of a first state in a use environment.
FIG. 7A illustrates a foldable electronic device according to an embodiment in a first state.
FIG. 7B illustrates a foldable electronic device according to a comparative example in a first state.
FIG. 8A illustrates a state in which a key button of a foldable electronic device according to an embodiment is used in a first state.
FIG. 8B illustrates a state in which a key button of a foldable electronic device according to an embodiment is used in a third state.
FIG. 9A illustrates printed circuit boards of a foldable electronic device according to an embodiment.
FIG. 9B illustrates printed circuit boards of a foldable electronic device according to a comparative example.
FIG. 10A illustrates a foldable electronic device including an antenna according to an embodiment.
FIG. 10B is a cross-sectional view of a first housing part of FIG. 10A cut along line A-A'.
FIG. 11A illustrates a foldable electronic device according to an embodiment in a first state.
FIG. 11B illustrates a foldable electronic device according to an embodiment in a second state.
FIG. 11C illustrates a foldable electronic device according to an embodiment in a free stop state.
FIG. 12 illustrates a rear side of a foldable electronic device according to an embodiment.
FIG. 13 illustrates batteries of a foldable electronic device according to an embodiment.

### [Mode for Invention]

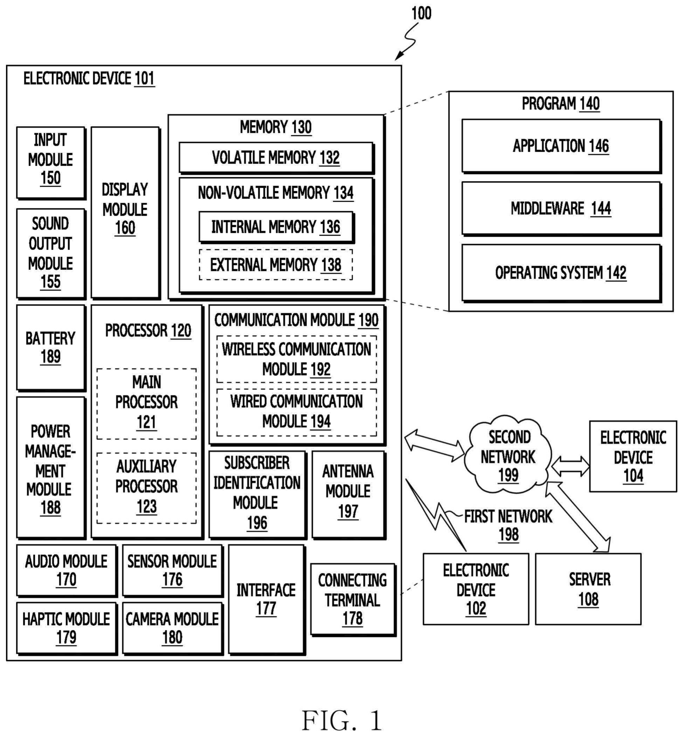

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

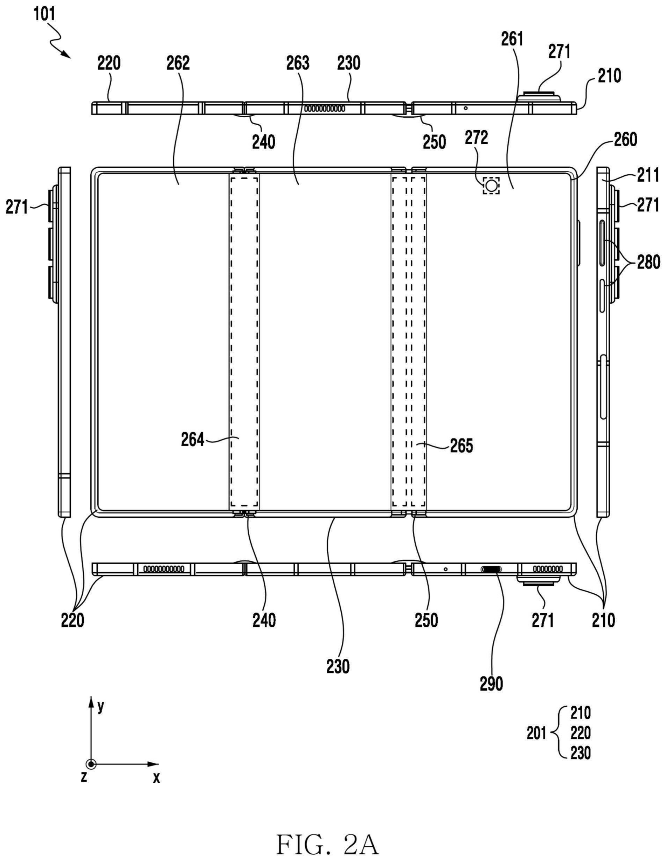

In the present disclosure, rotation may be referred to as a folded or unfolded operation of a foldable housing (e.g., a foldable housing 201 of FIG. 2A). For example, "a component is rotated with respect to another component" may be referred to as an operation in which a component is folded or unfolded with respect to another component.

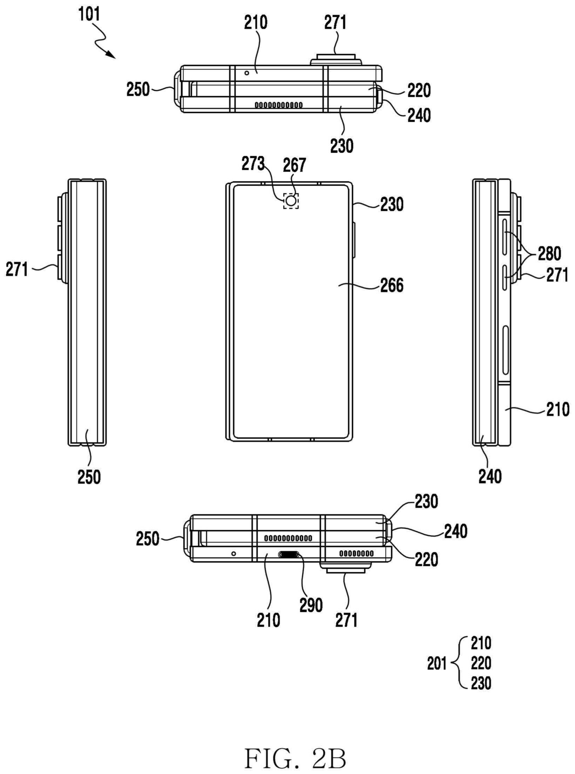

FIG. 2A illustrates a first state of an electronic device according to an embodiment. FIG. 2B illustrates a third state of an electronic device according to an embodiment.

Referring to FIG. 2A, a foldable electronic device 101 according to an embodiment may include a foldable housing 201, a first hinge assembly 240, a second hinge assembly 250, and a flexible display 260 (e.g., a first display and a main display).

According to an embodiment, the foldable housing 201 may be deformable. For example, the foldable housing 201 may include a first housing part 210, a second housing part 220, and a third housing part 230 that are rotatably coupled. The third housing part 230 may be disposed between the first housing part 210 and the second housing part 220. A side of the third housing part 230 may be rotatably coupled to a side of the first housing part 210. Another side of the third housing part 230 may be rotatably coupled to a side of the second housing part 220. The foldable housing 201 may be referred to as a multi foldable housing in terms of including the first housing part 210, the second housing part 220, and the third housing part 230 that are rotatably connected. In the present disclosure, the foldable housing 201 is described as a structure including the first housing part 210, the second housing part 220, and the third housing part 230, but is not limited thereto. For example, the foldable housing 201 may include four or more housing parts. A state of the foldable electronic device 101 illustrated in FIG. 2A is a state in which the first housing part 210, the second housing part 220, and the third housing part 230 are fully unfolded, and in the present disclosure, the state may be referred to as a first state.

According to an embodiment, the foldable electronic device 101 may include hinge assemblies 240 and 250 for providing various states of the foldable housing 201. For example, the foldable electronic device 101 may include a first hinge assembly 240 and a second hinge assembly 250. The first hinge assembly 240 may rotatably connect the second housing part 220 to the third housing part 230. The first hinge assembly 240 may be disposed between the second housing part 220 and the third housing part 230. The second hinge assembly 250 may rotatably connect the first housing part 210 to the third housing part 230. The second hinge assembly 250 may be disposed between the first housing part 210 and the third housing part 230.

According to an embodiment, the foldable housing 201 may have a structure that may be folded twice by the first hinge assembly 240 and the second hinge assembly 250. The first hinge assembly 240 and the second hinge assembly 250 may include components (e.g., linking gears) for providing a folded or unfolded operation of the foldable housing 201.

According to an embodiment, the flexible display 260 may be disposed in the first housing part 210, the second housing part 220, and the third housing part 230. The flexible display 260 may be configured to display visual information.

According to an embodiment, the flexible display 260 may include a first plane area 261, a second plane area 262, and a third plane area 263. For example, the first plane area 261 may be a portion of the flexible display 260 disposed in the first housing part 210 in an unfolded state. For example, the second plane area 262 may be a portion of the flexible display 260 disposed in the second housing part 220 in the unfolded state. For example, the third plane area 263 may be a portion of the flexible display 260 disposed in the third housing part 230 in the unfolded state. The first plane area 261, the second plane area 262, and the third plane area 263 may be distinguished to provide the visual information displayed on the flexible display 260 in various ways. For example, the visual information provided on a display portion of the flexible display 260 may be provided independently according to the first plane area 261, the second plane area 262, and the third plane area 263. For example, the flexible display 260 may be controlled such that the first plane area 261, the second plane area 262, and the third plane area 263 cooperatively provide one visual. For example, the flexible display 260 may be controlled such that the first plane area 261, the second plane area 262, and the third plane area 263 provide different visual information, respectively. For example, two of the first plane area 261, the second plane area 262, and the third plane area 263 may be controlled to provide one visual information, and remaining one may be controlled to provide another visual information.

According to an embodiment, when the foldable housing 201 is folded or unfolded, a portion of the flexible display 260 may also be folded or unfolded. The flexible display 260 may include a first bending area 264 between the second plane area 262 and the third plane area 263, and a second bending area 265 between the first plane area 261 and the third plane area 263. In the state of the foldable electronic device 101 illustrated in FIG. 2A, the first bending area 264 and the second bending area 265 may form substantially the same plane as the first plane area 261, the second plane area 262, and the third plane area 263.

According to an embodiment, the foldable electronic device 101 may include a first camera module 271 (e.g., a first camera device and a first camera assembly) disposed in the foldable housing 201. For example, the first camera module 271 may be disposed to face an opposite side of the flexible display 260, in the first housing part 210.

According to an embodiment, the foldable electronic device 101 may include a key button module 280. For example, the key button module 280 may be exposed from an edge portion 211 of the first housing part 210 opposite the second hinge assembly 250. For example, the key button module 280 may include at least one key button and processing circuitry disposed at a sidewall forming the edge portion 211 of the first housing part 210. The at least one key button may be exposed to the edge portion 211. As the at least one key button of the key button module 280 is exposed to the edge portion 211 of the first housing part 210, a user may push the at least one key button of the key button module 280. When the at least one key button is pushed, the processing circuitry of the key button module 280 may generate a signal corresponding to the pushed at least one key button. The signal may be provided to a main processor (e.g., the main processor 121 of FIG. 1).

According to an embodiment, the foldable electronic device 101 may include a connector hole 290. The connector hole 290 may be formed in a lower edge portion (e.g., an edge portion in a -y direction) of the first housing part 210. The connector hole 290 may be coupled to a terminal of an external electronic device. For example, a terminal of a charging device or a terminal of an audio device (e.g., an earphone) may be electrically connected to the foldable electronic device 101, by being coupled to the connector hole 290.

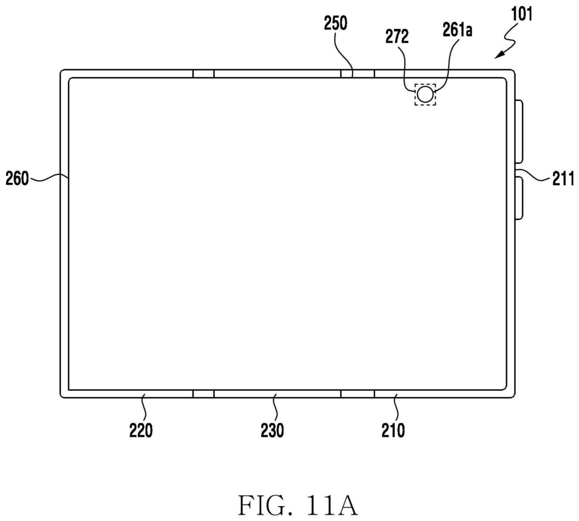

According to an embodiment, the foldable electronic device 101 may include a second camera module 272 (e.g., a second camera device and a second camera assembly). The second camera module 272 may face a direction opposite to a direction of the first camera module 271. The second camera module 272 may overlap the first plane area 261, by being disposed in the first housing part 210. The first plane area 261 may include a through hole (e.g., a through hole 261a of FIG. 11A) for the second camera module 272. The second camera module 272 may collect light reflected from a subject through the through hole 261a.

Referring to FIG. 2B, in a state that the foldable electronic device 101 is fully folded, the first housing part 210, the second housing part 220, and the third housing part 230 may overlap. For example, in the fully folded state, the second housing part 220 may be positioned between the first housing part 210 and the third housing part 230. A state of the foldable electronic device 101 illustrated in FIG. 2B is a state in which the first housing part 210, the second housing part 220, and the third housing part 230 are fully folded, and in the present disclosure, the state may be referred to as a third state.

According to an embodiment, the second hinge assembly 250 may have a wider width than the first hinge assembly 240. Referring to FIG. 2B, in the state that the foldable electronic device is fully folded, the second housing part 220 may be disposed between the first housing part 210 and the third housing part 230. The second hinge assembly 250 may have a wider width than the first hinge assembly 240 to provide a space in which the second housing part 220 may be positioned between the first housing part 210 and the third housing part 230.

According to an embodiment, the foldable electronic device 101 may include a sub-display 266 (e.g., a second display or a cover display). For example, the sub-display 266 may be disposed to face a rear side of the third housing part 230. The sub-display 266 may be opposite to the third plane area 263 of the flexible display 260. In the state that the foldable electronic device 101 is fully folded, the flexible display 260 may not be visually recognized from the outside, by being covered by the foldable housing 201. The sub-display 266 may be configured to be exposed to the outside and display visual information in the state that the foldable electronic device 101 is fully folded. The sub-display 266 may be configured to provide a text, an image and/or a video in the state that the foldable electronic device 101 is fully folded.

According to an embodiment, the foldable electronic device 101 may include a third camera module 273 (e.g., a third camera device and a third camera assembly). The third camera module 273 may overlap the sub-display 266 (e.g., the second display or the cover display), by being disposed in the third housing part 230. The third camera module 273 may be disposed to correspond to a direction in which the sub-display 266 faces. The third camera module 273 may be disposed to face an opposite direction to the first camera module 271. For example, the first camera module 271 may be disposed to face a front side of the foldable housing 201, and the third camera module 273 may be disposed to face a rear side of the foldable housing 201. The sub-display 266 may include a through hole 267 overlapping the third camera module 273. The third camera module 273 may collect light reflected from a subject through the through hole 267.

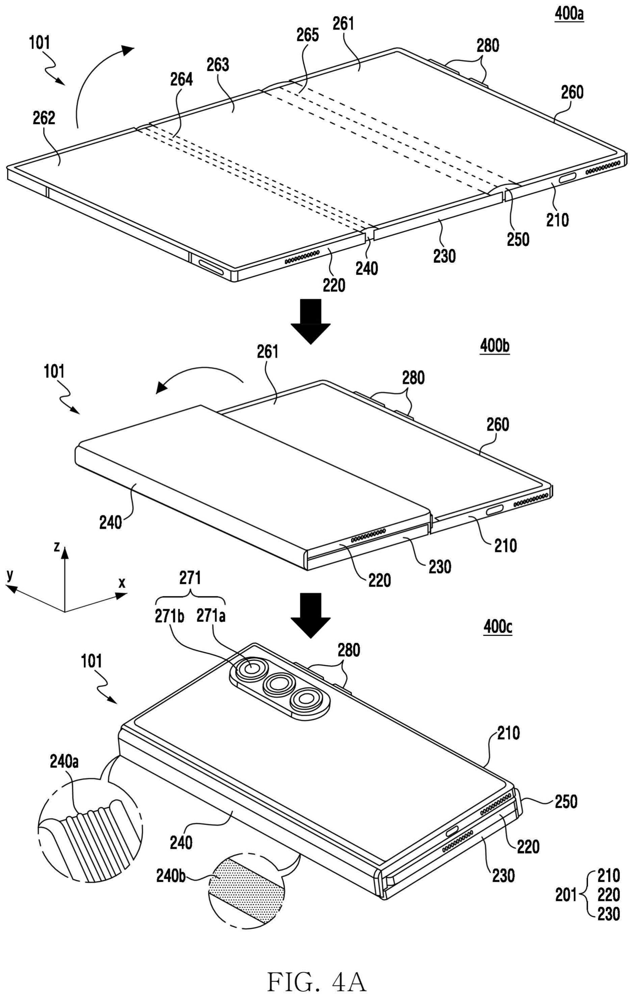

The foldable electronic device 101 may be changed from a fully unfolded state of the foldable electronic device illustrated in FIG. 2A to a fully folded state of the foldable electronic device illustrated in FIG. 2B. According to an embodiment, the first hinge assembly 240 and the second hinge assembly 250 may enable a change from the fully unfolded state to the fully folded state and a change from the fully folded state to the fully unfolded state. A process of changing a state of the foldable electronic device 101 will be described later with reference to FIG. 4A.

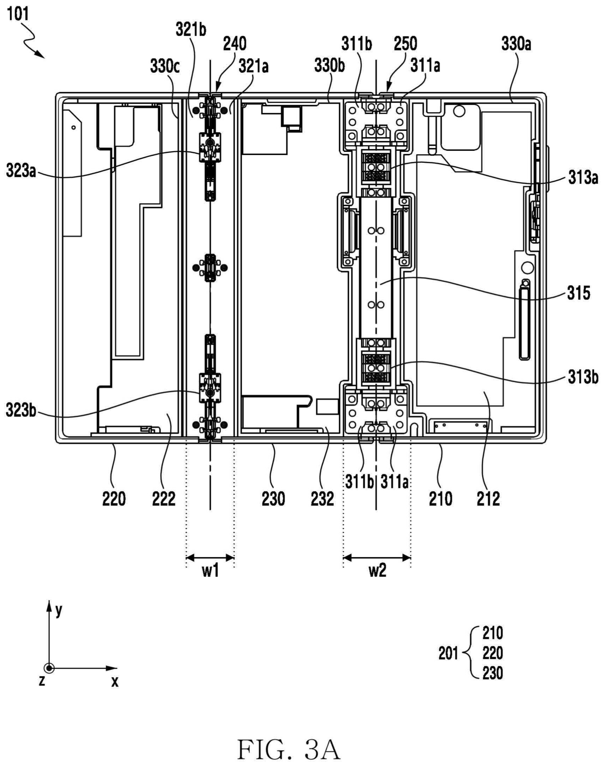

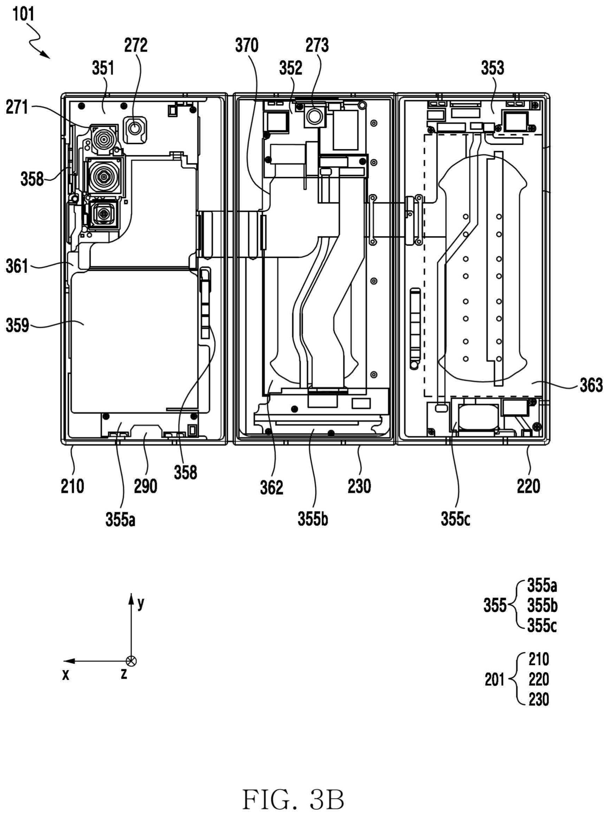

FIG. 3A is a plan view of a foldable electronic device in which a flexible display is omitted when the foldable electronic device is in a first state according to an embodiment. FIG. 3B is a rear view of a foldable electronic device in which a rear cover and a sub-display are removed when the foldable electronic device is in a first state according to an embodiment.

Referring to FIG. 3A, a second hinge assembly 250 of a foldable electronic device 101 may include at least one first hinge plate 311a, at least one second hinge plate 311b, sets of a plurality of hinge gears 313a and 313b, and a support plate 315. The at least one first hinge plate 311a of the second hinge assembly 250 may be coupled to a first support portion 212 of a first housing part 210. The first support portion 212 may support electronic components disposed in the first housing part 210. The at least one second hinge plate 311b of the second hinge assembly 250 may be coupled to a third support portion 232 of a third housing part 230. The third support portion 232 may support electronic components disposed in the third housing part 230. Each set of sets of first hinge gears 313a and 313b may rotatably connect the first support portion 212 and the third support portion 232. The support plate 315 of the second hinge assembly 250 may support a portion of a second bending area 265 of a flexible display 260.

A first hinge assembly 240 of the foldable electronic device 101 may include at least one third hinge plate 321a, at least one fourth hinge plate 321b, and the sets of the plurality of hinge gears 323a and 323b. The at least one third hinge plate 321a of the first hinge assembly 240 may be coupled to the third support portion 232 of the third housing part 230. The at least one fourth hinge plate 321b of the first hinge assembly 240 may be coupled to a second support portion 222 of a second housing part 220. The third support portion 232 may support electronic components disposed in the second housing part 220. Each set of sets of first hinge gears 323a and 323b may rotatably connect the third support portion 232 and the second support portion 222.

A second width w2 of the second hinge assembly 250 may be wider than a first width w1 of the first hinge assembly 240. A difference between the second width w2 of the second hinge assembly 250 and the first width w1 of the first hinge assembly 240 may be equal to or greater than a thickness of the second housing part 220. For example, as illustrated in FIG. 2B, the second width w2 of the second hinge assembly 250 may be formed wider than the first width w1 of the first hinge assembly 240, such that the second housing part 220 may be disposed between the first housing part 210 and the third housing part 230.

The foldable electronic device 101 may further include waterproof members 330a, 330b, and 330c. The waterproof members 330a, 330b, and 330c may reduce moisture or a foreign matter introduced from the outside from entering the inside of the foldable electronic device 101, by being attached to each of support portions 212, 222, and 232 of housing parts 210, 220, and 230 and a flexible display (e.g., the flexible display 260 of FIG. 2A). The waterproof members 330a, 330b, and 330c may include a waterproof tape, a waterproof adhesive, a double-sided tape, or an adhesive.

Referring to FIG. 3B, the foldable electronic device 101 may further include a first printed circuit board 351, a third printed circuit board 353, a second printed circuit board 352, and a plurality of sub-printed circuit boards 355.

The first printed circuit board 351 may be disposed in the first housing part 210. The first printed circuit board 351 may be in contact with another side of a first support portion (e.g., the first support portion 212 of FIG. 3A) of the first housing part 210. A plurality of electronic components for driving the foldable electronic device 101 may be disposed on the first printed circuit board 351. The plurality of electronic components may include a main processor (e.g., the main processor 121 of FIG. 1) including processing circuitry at least one memory including a storage medium, wireless communication circuitry for performing wireless communication with an external electronic device, a first camera module 271, and a second camera module 272. The first camera module 271 may be exposed through a partial structure (e.g., an opening) of a rear side of the first housing part 210.

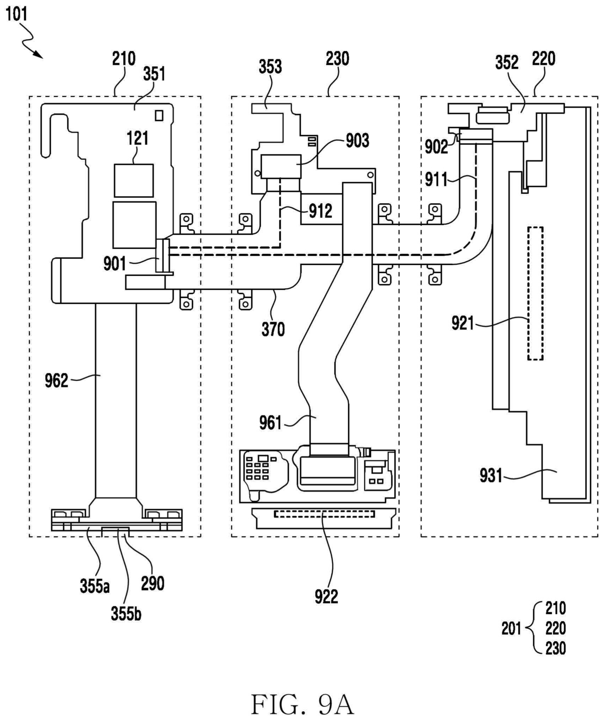

The second printed circuit board 352 may be disposed in the second housing part 220. The second printed circuit board 352 may be in contact with another side of a second support portion (e.g., the second support portion 222 of FIG. 3A) of the second housing part 220. A plurality of electronic components may be disposed on the second printed circuit board 352. The plurality of electronic components disposed on the second printed circuit board 352 may include components that may assist a plurality of electronic components disposed on the first printed circuit board 351 and/or the third printed circuit board 353 or operate independently. The second printed circuit board 352 may be electrically connected to first display driver integrated circuitry (e.g., first display driver integrated circuitry 921 of FIG. 9A) for driving the flexible display (e.g., the flexible display 260 of FIG. 2A).

The third printed circuit board 353 may be disposed in the third housing part 230. The third printed circuit board 353 may be in contact with another side of a third support portion (e.g., the third support portion 232 of FIG. 3A) of the third housing part 230. A plurality of electronic components may be disposed on the third printed circuit board 353. The plurality of electronic components disposed on the third printed circuit board 353 may include components that may assist the plurality of electronic components disposed on the first printed circuit board 351 or operate independently. The plurality of electronic components disposed on the third printed circuit board 353 may include a speaker and/or a third camera module 273. The third printed circuit board 353 may be electrically connected to second display driver integrated circuitry (e.g., second display driver integrated circuitry 922 of FIG. 9A) for driving a sub-display (e.g., the sub-display 266 of FIG. 2B).

A first sub-printed circuit board 355a may be in contact with another side of the first support portion 212 of the first housing part 210. A plurality of electronic components may be disposed on the first sub-printed circuit board 355a. The plurality of electronic components disposed on the first sub-printed circuit board 355a may assist the plurality of electronic components disposed on the first printed circuit board 351. A speaker may be disposed on the first sub-printed circuit board 355a. The first sub-printed circuit board 355a may be connected to a connector hole 290 configured to be electrically connected to an external electronic device. Power or data may be transmitted and received from the external electronic device through the connector hole 290.

A second sub-printed circuit board 355b may be in contact with another side of the second support portion 222 of the second housing part 220. A plurality of electronic components may be disposed on the second sub-printed circuit board 355b. The plurality of electronic components disposed on the second sub-printed circuit board 355b may assist the plurality of electronic components disposed on the second printed circuit board 352. A speaker may be disposed on the second sub-printed circuit board 355b. A plurality of speakers disposed on the first sub-printed circuit board 355a, the third printed circuit board 353, and the second sub-printed circuit board 355b may be configured to provide audio information from the foldable electronic device 101. Printed circuit boards or sub-printed circuit boards on which the plurality of speakers are disposed are exemplary and may be disposed in a different position. A portion of a plurality of sub-printed circuit boards 355 may be omitted according to a disposition of electronic components, or another sub-printed circuit board, aside from the plurality of sub-printed circuit boards 355, may be added.

A third sub-printed circuit board 355c may be in contact with another side of the third support portion 232 of the third housing part 230. A plurality of electronic components may be disposed on the third sub-printed circuit board 355c. The plurality of electronic components disposed on the third sub-printed circuit board 355c may assist the plurality of electronic components disposed on the third printed circuit board 353.

The foldable electronic device 101 may further include a plurality of batteries 361, 362, and 363. Each of the plurality of batteries 361, 362, and 363 may be coupled to the support portions 212, 222, and 232 in the housing parts 210, 220, and 230 of the foldable electronic device 101. The plurality of batteries 361, 362, and 363 may be a rechargeable secondary battery.

The foldable electronic device 101 may further include an antenna module 358 for an ultra-high frequency signal and an antenna 359 for NFC. The antenna module 358 and the antenna 359 may be disposed in the first housing part 210. The antenna 359 may overlap a first battery 361.

The foldable electronic device 101 may include a flexible printed circuit board 370. The flexible printed circuit board 370 may electrically connect the first printed circuit board 351 to the second printed circuit board 352 and the third printed circuit board 353. The main processor (e.g., the main processor 121 of FIG. 1) disposed on the first printed circuit board 351 may provide a signal to electronic components electrically connected to the second printed circuit board 352 and electronic components electrically connected to the third printed circuit board 353, by using the flexible printed circuit board 370.

The foldable electronic device 101 described below may correspond to the foldable electronic device 101 described with reference to FIG. 2A, FIG. 2B, FIG. 3A, and FIG. 3B. The same elements may be given the same reference numerals, and an overlapping description may be briefly described or omitted.

In the present disclosure, a relative term such as above, below, a front side, and a rear side may be used. It will be understood that the relative term is not limited to a direction indicated in the drawing, but is intended to encompass another direction. For example, when the foldable electronic device 101 illustrated in the drawing is flipped over, above and below may be switched with each other, and a front side and a rear side may be switched with each other.

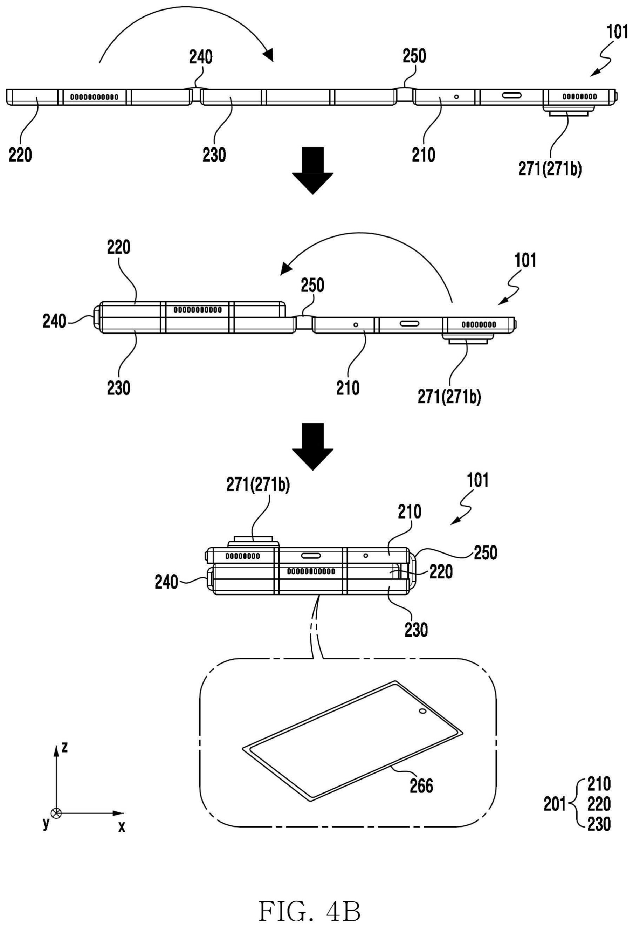

FIG. 4A and FIG. 4B illustrate a process of changing a state of a foldable electronic device according to an embodiment.

Referring to FIGS. 4A and 4B, a foldable electronic device 101 according to an embodiment may include a foldable housing 201 including a first housing part 210, a second housing part 220, and a third housing part 230. As described above, the third housing part 230 may be disposed between the first housing part 210 and the second housing part 220.

According to an embodiment, the second housing part 220 may be rotatably connected to a side of the third housing part 230. A first hinge assembly 240 may rotatably connect the second housing part 220 to the third housing part 230.

According to an embodiment, the first housing part 210 may be rotatably connected to another side of the third housing part 230. A second hinge assembly 250 may rotatably connect the first housing part 210 to the third housing part 230. As described above, the second hinge assembly 250 may have a wider width than the first hinge assembly 240.

According to an embodiment, the foldable electronic device 101 may be configured to provide a plurality of states based on an operation of the first hinge assembly 240 and an operation of the second hinge assembly 250. A first state 400a of FIG. 4A indicates a state in which the foldable electronic device 101 is fully unfolded. In the first state 400a, the first housing part 210, the second housing part 220, and the third housing part 230 may be disposed substantially in parallel. In the first state 400a, a front side of the first housing part 210, a front side of the second housing part 220, and a front side of the third housing part 230 may face substantially the same direction. The first state 400a may be referred to as an open state, a flat state, an unfolded state, and/or an outspread state, in terms of the first housing part 210, the second housing part 220, and the third housing part 230 being fully unfolded.

A second state 400b of FIG. 4A may be provided, in the first state 400a, by rotating the second housing part 220 in a first rotating direction (e.g., counterclockwise) with respect to the third housing part 230. The second housing part 220 may be rotated with respect to the third housing part 230 through the first hinge assembly 240. In the first state 400a, as the second housing part 220 rotates in the first rotating direction, the front side of the third housing part 230 may face the front side of the second housing part 220. The second state 400b may be referred to as a semi-fold state, a sub-unfolded state, a sub-fold state, an intermediate state, and/or a concave state in terms of a portion of the foldable housing 201 being folded.

A third state 400c of FIG. 4A may be provided, in the second state 400b, by rotating the first housing part 210 in a second rotating direction (e.g., clockwise) opposite to the first rotating direction with respect to the third housing part 230. The first housing part 210 may be rotated with respect to the third housing part 230 through the second hinge assembly 250. In the second state 400b, as the first housing part 210 rotates in the second rotating direction, the front side of the first housing part 210 may face a rear side of the second housing part 220. The third state 400c may be referred to as a closed state or a folded state in terms of the foldable housing 201 being fully folded.

In the third state 400c, the second housing part 220 may be disposed between the first housing part 210 and the second housing part 220. When the foldable electronic device 101 of the third state 400c is viewed from above, the first housing part 210, the second housing part 220, and the third housing part 230 may overlap each other.

According to an embodiment, the foldable electronic device 101 may include a first camera module 271. The first camera module 271 may be plural. The first camera module 271 may be disposed to face a rear side of the first housing part 210. The first camera module 271 may include a camera 271a and a deco 271b. The camera 271a may be configured to collect light reflected from a subject and generate an image and/or a video based on the reflected light. The deco 271b may be partially exposed through the rear side of the first housing part 210. The deco 271b may be referred to as a camera deco member or a camera island.

According to an embodiment, the foldable electronic device 101 may include a flexible display 260. The flexible display 260 may be disposed in the first housing part 210, the second housing part 220, and the third housing part 230. The flexible display 260 may include a first plane area 261, a second plane area 262, and a third plane area 263. The flexible display 260 may include a first bending area 264 between the second plane area 262 and the third plane area 263, and a second bending area 265 between the first plane area 261 and the third plane area 263.

The foldable electronic device 101 may be used in the first state 400a to use the flexible display 260 of a large screen. The foldable electronic device 101 may be switched, for being easily carried by a user, from the first state 400a to the third state 400c. For example, the foldable electronic device 101 may be switched from the first state via the second state to the third state.

According to an embodiment, the foldable electronic device 101 may include a sub-display 266. The sub-display 266 may be disposed in the third housing part 230 and may be opposite to the flexible display 260. For example, the sub-display 266 may be opposite to the third plane area 263 of the flexible display 260. Referring to FIG. 4B, the sub-display 266 may be visually recognized from the outside in the third state 400c. Since the flexible display 260 may not be visually recognized from the outside in the third state 400c, the foldable electronic device 101 may be configured to provide visual information through the sub-display 266 in the third state 400c. For example, when an event (e.g., an incoming call) associated with the foldable electronic device 101 occurs in the third state 400c, the foldable electronic device 101 may be configured to display the visual information indicating the event through sub-display 266.

According to an embodiment, the foldable electronic device 101 may be used in the second state 400b. When an event associated with the foldable electronic device 101 occurs in the second state 400b, the foldable electronic device 101 may be configured to display visual information indicating the event through the third plane area 263 of the flexible display 260. Since an entire area of the flexible display 260 is exposed to the outside in the first state 400a, the foldable electronic device 101 may be configured to display the visual information through the flexible display 260.

According to an embodiment, the foldable electronic device 101 may include a key button module 280. The key button module 280 may be exposed through an edge portion 211 of the first housing part 210. For example, at least one key button of the key button module 280 may be disposed at a sidewall (e.g., the edge portion 211) of the first housing part 210 forming the edge portion 211. The edge portion 211 of the first housing part 210 to which the key button module 280 is exposed may be opposite to the second hinge assembly 250.

According to an embodiment, the first housing part 210 may include a first printed circuit board (e.g., a first printed circuit board 351 of FIG. 9A) and a main processor (e.g., the main processor 121 of FIG. 1) disposed on the first printed circuit board 351. The main processor 121 may be configured to control an overall operation of the foldable electronic device 101. A function or an operation of the foldable electronic device 101 may be processed by the main processor 121.

According to an embodiment, the main processor 121 may be configured to identify a state of the foldable electronic device 101. The main processor 121 may be configured, according to the identified state of the foldable electronic device 101, to select a display to display visual information by using an artificial intelligence model. For example, in the first state 400a, the main processor 121 may be configured to display visual information through the entire area of the flexible display 260, by using the artificial intelligence model. In the second state 400b, the main processor 121 may be configured to display the visual information through the third plane area 263 of the flexible display 260, by using the artificial intelligence model. In the third state 400c, the main processor 121 may be configured to display visual information through the sub-display 266, by using an artificial intelligence model.

According to an embodiment, the main processor 121 may control a form of visual information differently according to the display to display the visual information. For example, when the visual information is displayed through the entire area of the flexible display 260, the main processor 121 may provide first visual information including relatively large number of images or texts, by using a generative artificial intelligence model. When the visual information is displayed through the third plane area 263 of the flexible display 260, the main processor 121 may provide second visual information including an image or text less (or smaller) than the first visual information, by using the generative artificial intelligence model. When the visual information is displayed through the sub-display 266, the main processor 121 may provide third visual information including an image or text less (or smaller) than the second visual information, by using the generative artificial intelligence model.

Referring to FIG. 4A, a user may hold a portion of the first hinge assembly 240, and may fold or unfold the foldable electronic device 101. For example, the user may hold the first hinge assembly 240 and may rotate the first housing part 210, in order to change the foldable electronic device 101 from the third state 400c to the second state 400b. Since the user may hold a portion of the first hinge assembly 240 when folding or unfolding the foldable electronic device 101, an outer side of the first hinge assembly 240 may have a material and/or a structure capable of helping a grip of the user. For example, grooves 240a may be formed on the outer side of the first hinge assembly 240. Alternatively, as small convex-concave portions 240b is formed on the outer side of the first hinge assembly 240, a rough surface may be provided. The grooves 240a and/or the convex-concave portions 240b may help the user easily hold the foldable electronic device 101 by providing a frictional force when a hand of the user contacts the first hinge assembly 240. The grooves 240a and the convex-concave portions 240b are merely an example of the material and/or the structure of the first hinge assembly 240 for helping the grip of the user, but are not limited thereto.

The foldable housing 201 including three housing parts may have, aside from a structure illustrated in FIG. 4A and FIG. 4B, another structure. The foldable electronic device 101 according to an embodiment of the present disclosure may provide various advantages by having the structure illustrated in FIGS. 4A and 4B. Hereinafter, various advantages of the foldable electronic device 101 according to an embodiment having the structure illustrated in FIGS. 4A and 4B will be described.

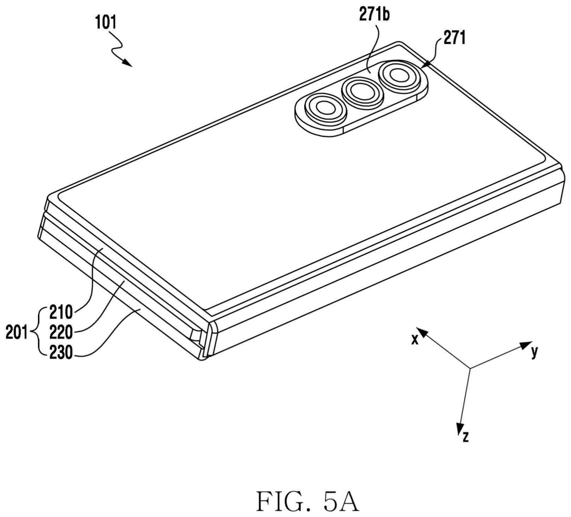

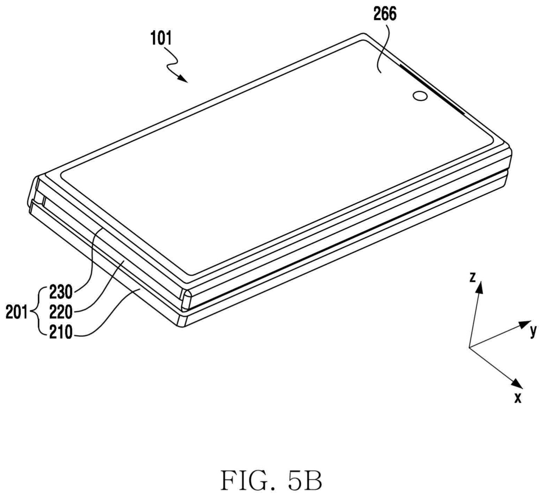

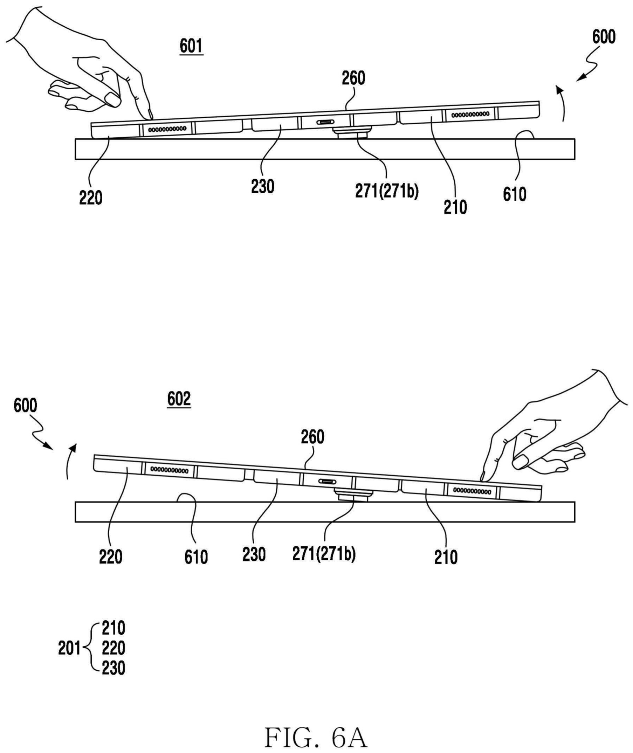

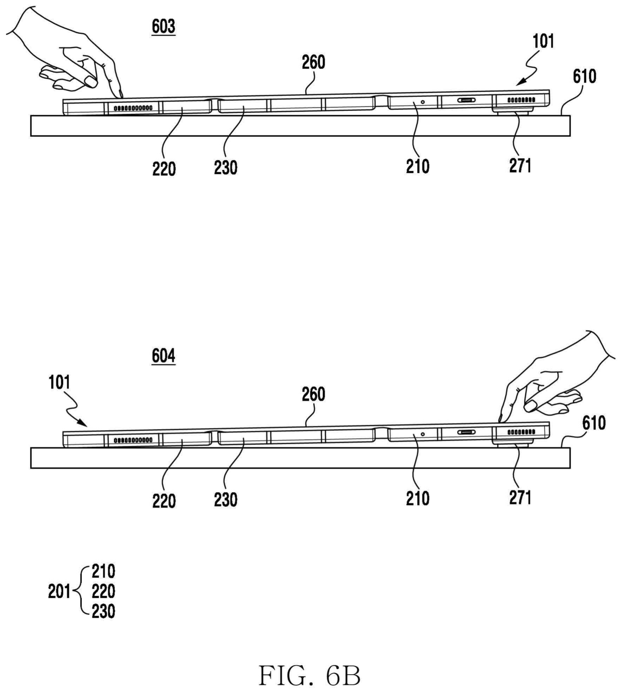

FIG. 5A is a rear perspective view of a foldable electronic device according to an embodiment of a third state. FIG. 5B is a front perspective view of a foldable electronic device according to an embodiment of a third state. FIG. 6A illustrates a foldable electronic device according to a comparative example of a first state in a use environment. FIG. 6B illustrates a foldable electronic device according to an embodiment of a first state in a use environment.

Referring to FIG. 5A, as described above, a first camera module 271 may be disposed in a first housing part 210. The first camera module 271 may be partially exposed through a rear side of the first housing part 210. For example, a deco 271b of the first camera module 271 may protrude from the rear side of the first housing part 210.

According to an embodiment, the first camera module 271 may shoot a subject positioned in a direction of the rear side, by being disposed to face the direction of the rear side of the first housing part 210. For example, the first camera module 271 may be disposed in the rear side of the first housing part 210. A second camera module (e.g., a second camera module 272 of FIG. 5B) to be described later may shoot a subject positioned in a direction of a front side opposite to the direction of the rear side, by being disposed in a direction opposite to a direction of the first camera module 271. The first camera module 271 may include image processing circuitry configured to generate an image.

The first camera module 271 should be included in the first housing part 210 or a third housing part 230, among the first housing part 210, a second housing part 220, and the third housing part 230, in order for the first camera module 271 to be used in the first state or the third state of the foldable electronic device 101. For example, when the first camera module 271 is included in the second housing part 220, as the second housing part 220 is positioned between the first housing part 210 and the third housing part 230 in the third state, the first camera module 271 may not be exposed to the outside of the foldable electronic device 101,.

For example, when the first camera module 271 is included in the third housing part 230, among the first housing part 210 and the third housing part 230, the first camera module 271 may be exposed to the outside of the foldable electronic device 101 in the third state. When the first camera module 271 is included in the third housing part 230, the first camera module 271 will be disposed to face a direction of a rear side of the third housing part 230. Referring to FIG. 5B, since a sub-display 266 is disposed to face the rear side of the third housing part 230, the sub-display 266 and the first camera module 271 may overlap, when a first camera module (e.g., the first camera module 271 of FIG. 5A) is included in the third housing part 230. In this case, since the sub-display 266 should be reduced by an area in which the first camera module 271 is positioned, a size of a display area of the sub-display 266 may be reduced.

Referring to FIG. 6A, a foldable electronic device 600 according to a comparative example in which the first camera module 271 is included in the third housing part 230 will be illustrated. The deco 271b of the first camera module 271 may be partially exposed through the rear side of the third housing part 230. The deco 271b may protrude from the rear side of the third housing part 230.

Referring to FIG. 6A, the foldable electronic device 600 may be used, in the first state, by being placed on a floor 610. For example, the foldable electronic device 600 of the first state may be used in a state of being placed on a desk. A user may provide a user input through a flexible display 260. When a finger of the user touches the flexible display 260, a designated operation of the foldable electronic device 600 may be performed in response to a touch input.

In case of the foldable electronic device 600 according to a comparative example, since the first camera module 271 is included in the third housing part 230 positioned at a center of the foldable housing 201 and the first camera module 271 protrudes from the rear side of the third housing part 230, the first housing part 210 and the second housing part 220 may be spaced apart from the floor 610. Since the protruding first camera module 271 is substantially positioned at the center of the foldable housing 201, the first housing part 210 or the third housing part 230 may not be inclined and may float on the floor 610. Since the third housing part 230 is disposed between the first housing part 210 and the second housing part 220, a distance at which the first housing part 210 and the second housing part 220 are spaced apart from the floor 610 may be substantially the same as a length in which the first camera module 271 protrudes from the rear side of the third housing part 230. Since the first housing part 210 and the second housing part 220 float by being spaced apart from the bottom 610, the foldable electronic device 600 may be tilted left and right according to the touch input of the user.

For example, as in 601 of FIG. 6A, when the user pushes the first housing part 210, the first housing part 210 may be inclined downward. When the first housing part 210 is inclined downward, the second housing part 220 positioned in an opposite side of the first housing part 210 may be inclined upward. Conversely, as in 602 of FIG. 6A, when the user pushed the second housing part 220, the second housing part 220 may be inclined downward. When the second housing part 220 is inclined downward, the third housing part 230 positioned in an opposite side of the second housing part 220 may be inclined upward. Since the distance at which the first housing part 210 and the second housing part 220 are spaced apart from the floor 610 by the first camera module 271 is relatively far, a degree to which the foldable housing 201 is inclined may be relatively large. As a performance of the first camera module 271 increases, a size of the first camera module 271 may increase, and when a thickness of the foldable housing 201 is thinner to enhance portability, a length of the first camera module 271 protruding to a rear side of the foldable housing 201 may increase. As the protruding length increases, an angle at which the foldable housing 201 is inclined increases, and thus usability may be weakened.

Referring to FIG. 6B, the foldable electronic device 101 according to an embodiment may be included in the first housing part 210 in which the first camera module 271 is connected to a second hinge assembly 250. The first camera module 271 may protrude from the rear side of the first housing part 210. Since the first housing part 210 is not positioned at the center of the foldable housing 201 unlike the third housing part 230, even when the first camera module 271 protrudes from the rear side of the first housing part 210, an inclination of the foldable housing 201 may be alleviated. For example, when the foldable electronic device 101 according to an embodiment is placed on the floor 610 in the first state, the first housing part 210 may be spaced apart from the floor 610 by the first camera module 271. Unlike a case in which the first camera module 271 protrudes from the rear side of the third housing part 230, since the first camera module 271 is positioned close to a periphery of the foldable housing 201, the second housing part 220 may contact the floor 610 by gravity.

According to an embodiment, the foldable housing 201 may not be tilted, even when the foldable electronic device 101 is used in a state placed on the floor 610 in the first state. For example, as in 603 of FIG. 6B, even when the user pushes the third housing part 230, since the first housing part 210 supported by the first camera module 271 in contact with the floor 610 is supported by the floor 610, the foldable housing 201 may not be inclined. As in 604 of FIG. 6B, even when the user pushes the first housing part 210, since the second housing part 220 in contact with the floor 610 is supported by the floor 610, the foldable housing 201 may not be inclined. Even when the length of the first camera module 271 protruding from the rear side of the first housing part 210 is increased, in the first state, since the foldable housing 201 placed on the floor 610 is supported by the floor 610, an inclination such as the foldable electronic device 600 according to a comparative example may be resolved. According to an embodiment, as the first camera module 271 is included in the first housing part 210, the foldable electronic device 101 may be stably used in the state placed on the floor 610.

According to an embodiment, the first camera module 271 may be plural. For example, the first camera module 271 may include a folded camera in a form of a periscope that refracts light to obtain an image. The folded camera may refract light using a prism, and the refracted light may pass through a lens and a sensor, arranged in a direction.

Since the first housing part 210, the second housing part 220, and the third housing part 230 overlap each other in the first state of the foldable electronic device 101, each of the housing parts 210, 220, and 230 may have a relatively thin thickness. Since the folded camera is disposed perpendicular to a longitudinal direction of the foldable housing 201 such that a lens faces the rear side of the foldable housing 201, the folded camera may have a relatively thick thickness. In a case of the third housing part 230, since the flexible display 260 and the sub-display 266 are disposed, a thickness for accommodating the folded camera may be insufficient. As described above, since a rear side of the second housing part 220 is not exposed to the outside in the third state, a first camera may not be disposed in the second housing part 220. The first camera module 271 may be disposed in the first housing part 210 capable of securing a relatively thick thickness.

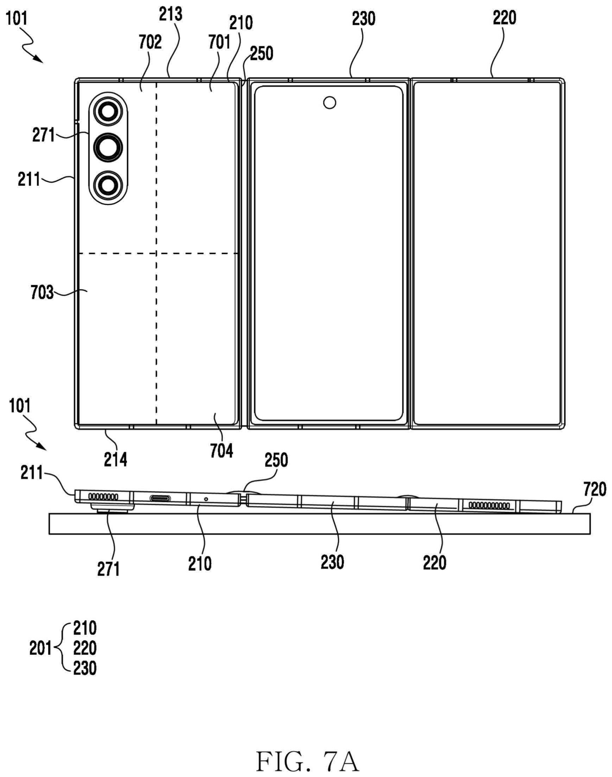

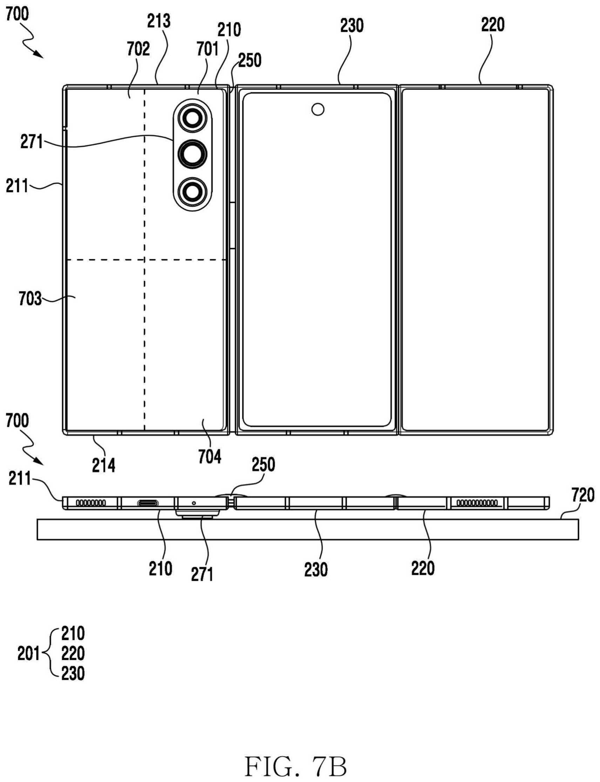

FIG. 7A illustrates a foldable electronic device according to an embodiment in a first state. FIG. 7B illustrates a foldable electronic device according to a comparative example in a first state.

According to an embodiment, the first camera module 271 may be disposed in the first housing part 210 at a position for minimizing or reducing the inclination. When the rear side of the first housing part 210 is virtually divided into quarters, it is assumed that a right upper area is a first quadrant 701, a left upper area is a second quadrant 702, a left lower area is a third quadrant 703, and a right lower area is a fourth quadrant 704. According to an embodiment, the first camera module 271 may be positioned in the second quadrant 702.

According to an embodiment, the first camera module 271 may be positioned closer to an edge portion 211 of the first housing part 210 than the second hinge assembly 250 in the first housing part 210. The edge portion 211 of the first housing part 210 may be opposite to a first hinge assembly 240. Since the first camera module 271 is positioned close to the edge portion 211, the above-described inclination may be resolved.

Referring to FIG. 7B, a foldable electronic device 700 according to a comparative example in which the first camera module 271 is positioned closer to the second hinge assembly 250 than the edge portion 211 of the first housing part 210 in the first housing part 210 will be illustrated. When the first camera module 271 is positioned closer to the second hinge assembly 250 than the edge portion 211 of the first housing part 210 in the first housing part 210, even when the first camera module 271 is included in the first housing part 210, an inclination may be caused. The first camera module 271 being positioned close to the second hinge assembly 250 may indicate that the first camera module 271 being positioned in the first quadrant 701 or the fourth quadrant 704. When the foldable electronic device 700 according to a comparative example of the first state is placed on a floor 720, the foldable housing 201 may be spaced apart from the floor 720 by the first camera module 271. As the foldable housing 201 is spaced apart from the floor 720, the above-described inclination may be caused.

Referring again to FIG. 7A, in the foldable electronic device 101 according to an embodiment, as the first camera module 271 is positioned close to the edge portion 211 of the first housing part 210, the foldable housing 201 may be supported by the floor 720, when the foldable electronic device 101 in the first state is placed on the floor 720. The foldable housing 201 supported by the floor 720 may resolve the above-described inclination.

According to an embodiment, the first camera module 271 may be positioned closer to an upper edge portion 213 among the upper edge portion 213 and a lower edge portion 214 in the first housing part 210. For example, when the first camera module 271 is positioned closer to the lower edge portion 214 among the upper edge portion 213 and the lower edge portion 214 in the first housing part 210, the first camera module 271 may be covered by a hand of a user. In general, when a user shoot an image or a video using the first camera module 271, the user may use by holding a lower portion of the foldable housing 201. When the first camera module 271 is positioned close to the lower edge portion 214, as the first camera module 271 is at least partially covered by the hand of the user, usability of the first camera module 271 may be reduced. According to an embodiment, the first camera module 271 may be positioned close to the upper edge portion 213 to move away from the hand of the user. As a result, the foldable electronic device 101 according to an embodiment may include the first camera module 271 positioned in the second quadrant 702 of the first housing part 210.

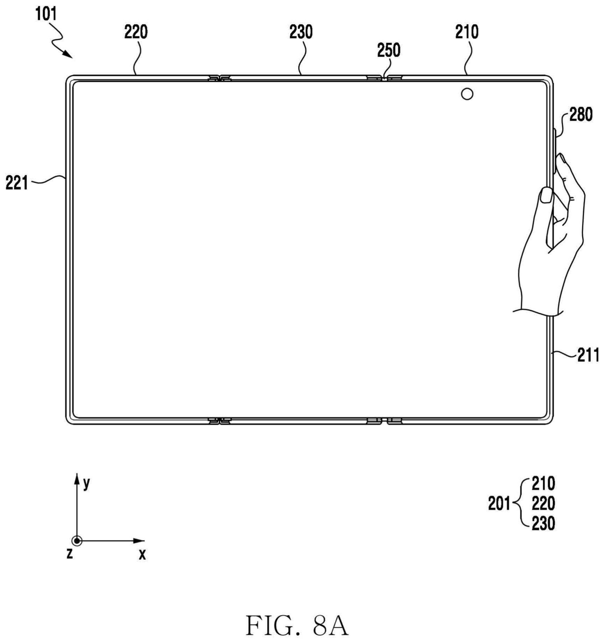

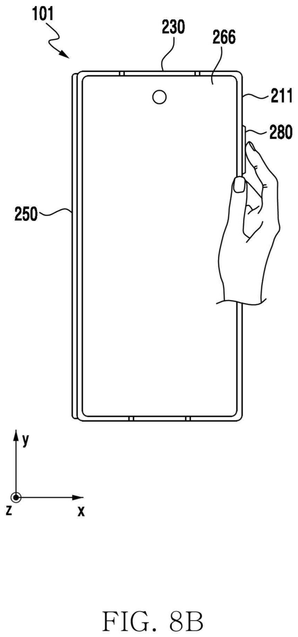

FIG. 8A illustrates a state in which a key button of a foldable electronic device according to an embodiment is used in a first state. FIG. 8B illustrates a state in which a key button of a foldable electronic device according to an embodiment is used in a third state.

Referring to FIG. 8A, a foldable electronic device 101 according to an embodiment may include a key button module 280 exposed from an edge portion 211 of a first housing part 210. The key button module 280 may be used to receive a user input. For example, the foldable electronic device 101 may be in an inactive state. The inactive state, which is a state in which a power management integrated circuit (PMIC) of the foldable electronic device 101 ceases providing power, may be referred to as a turn-off state requiring booting to switch to an active state. The inactive state may be referred to as an idle state, a standby state, or a low power state. A user may push at least one key button of the key button module 280 to switch the foldable electronic device 101 from the inactive state to the active state. A main processor (e.g., the main processor 121 of FIG. 1) may be configured to switch the foldable electronic device 101 from the inactive state to the active state based on identifying the user input to the key button module 280. For example, as the foldable electronic device 101 switches from the inactive state to the active state, a sub-display 266 may be configured to display visual information. In addition to this, the key button module 280 may be used to receive a designated user input. For example, the key button module 280 may be used to receive a user input for adjusting a volume of an audio signal outputted from a speaker.

According to an embodiment, the key button module 280 may be used to identify a designated user of the foldable electronic device 101. For example, the key button module 280 may be used to recognize a fingerprint of the user. When the user contacts a finger on at least one key button of the key button module 280, the key button module 280 may provide data indicating a pattern of the fingerprint to a main processor 121. The main processor 121 may be configured to identify whether a first pattern of a fingerprint identified through the data corresponds to a second pattern of a fingerprint registered in a memory. For example, the main processor 121 may be configured to identify whether the first pattern of the fingerprint identified through the key button module 280 corresponds to the second pattern of the fingerprint registered in memory. The main processor 121 may be configured to perform an operation (e.g., unlocking) of allowing use of the foldable electronic device 101 based on identifying the first pattern corresponding to the second pattern.

According to an embodiment, the key button module 280 may be exposed, in the first state and the third state of the foldable electronic device 101, to the outside of the foldable electronic device 101 to receive the user input. The key button module 280 may be exposed from the edge portion 211 of the first housing part 210, in order for the key button module 280 to be exposed to the outside of the foldable electronic device 101 in the first state and the third state of the foldable electronic device 101. For example, at least one key button of the key button module 280 may be disposed at a sidewall of the first housing part 210 forming the edge part 211. If the key button module 280 is disposed in the second housing part 220 and is exposed to an edge portion 221 of the second housing part 220, since the key button module 280 is not exposed to the outside of the foldable electronic device 101 in the third state, the key button module 280 is unavailable in the third state.

According to an embodiment, the foldable electronic device 101 may be exposed in the same direction in the first state and the third state by being exposed to the edge portion 211 of the first housing part 210. The key button module 280 may be positioned in the same direction in the first state and the third state of the foldable electronic device 101 by being exposed to the edge portion 211 of the first housing part 210 connected to the second hinge assembly 250. As illustrated in FIG. 8A, the key button module 280 exposed to the edge portion 211 of the first housing part 210 may be positioned in a right side (e.g., a +x direction) of the foldable electronic device 101.

Referring to FIG. 8B, the foldable electronic device 101 of the third state will be illustrated. The foldable electronic device 101 in the third state may be used so that the sub-display 266 is visible. The user may use the foldable electronic device 101 in a posture in which the sub-display 266 faces a +z direction, in order to recognize the visual information provided through the sub-display 266. When the foldable electronic device 101 has the posture, the key button module 280 may be positioned in the right side (e.g., the +x direction) of the foldable electronic device 101. According to an embodiment, the key button module 280 may be positioned in the same direction (e.g., the +x direction) of the foldable electronic device 101 in the first state and the third state of the foldable electronic device 101, by being disposed in the first housing part 210 connected to the second hinge assembly 250 and exposed from the edge portion 211 of the first housing part 210. Since a position of the key button module 280 is not changed according to a state of the foldable electronic device 101 and is maintained in the same direction, usability may be improved.

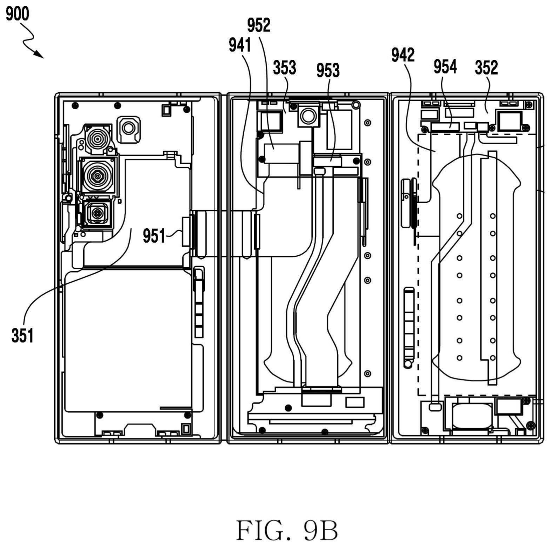

FIG. 9A illustrates printed circuit boards of a foldable electronic device according to an embodiment. FIG. 9B illustrates printed circuit boards of a foldable electronic device according to a comparative example.

Referring to FIG. 9A, a foldable electronic device 101 may include a first printed circuit board 351, a second printed circuit board 352, and a third printed circuit board 353. The first printed circuit board 351, the second printed circuit board 352, and the third printed circuit board 353 may include a plurality of conductive layers and a plurality of non-conductive layers alternately laminated with the plurality of conductive layers. The first printed circuit board 351, the second printed circuit board 352, and the third printed circuit board 353 may provide an electrical connection between electronic components disposed in each of the first printed circuit board 351, the second printed circuit board 352, and the third printed circuit board 353 by using wirings and conductive vias formed on the conductive layer.

According to an embodiment, the first printed circuit board 351 may be disposed in a first housing part 210. The first printed circuit board 351 may provide an electrical connection between electronic components electrically connected to the first printed circuit board 351. The second printed circuit board 352 may be disposed in a second housing part 220. The second printed circuit board 352 may provide an electrical connection between electronic components electrically connected to the second printed circuit board 352. The third printed circuit board 353 may be disposed in a third housing part 230. The third printed circuit board 353 may provide an electrical connection between electronic components electrically connected to the third printed circuit board 353.

Since the first printed circuit board 351, the second printed circuit board 352, and the third printed circuit board 353 are spaced apart from each other, a connection member for electrically connecting the first printed circuit board 351, the second printed circuit board 352, and the third printed circuit board 353 may be required. According to an embodiment, the foldable electronic device 101 may include a flexible printed circuit board 370 electrically connecting the first printed circuit board 351, the second printed circuit board 352, and the third printed circuit board 353. The flexible printed circuit board 370 may include a first connector 901 connected to the first printed circuit board 351, a second connector 902 connected to the second printed circuit board 352, and a third connector 903 connected to the third printed circuit board 353.

According to an embodiment, the flexible printed circuit board 370 may be configured to electrically connect the first printed circuit board 351 to each of the second printed circuit board 352 and the third printed circuit board 353. The flexible printed circuit board 370 may be configured to provide a signal provided from the first printed circuit board 351 to the second printed circuit board 352 or the third printed circuit board 353. For example, the flexible printed circuit board 370 may include a first portion 911 electrically connecting the first printed circuit board 351 to the second printed circuit board 352, and a second portion 912 electrically connecting the first printed circuit board 351 to the third printed circuit board 353. A signal transmitted between the first printed circuit board 351 and the second printed circuit board 352 may be transmitted through the first portion 911. A signal transmitted between the first printed circuit board 351 and the third printed circuit board 353 may be transmitted through the second portion 912. When the flexible printed circuit board 370 includes a layer, the first portion 911 and the second portion 912 may be disposed on the layer. When the flexible printed circuit board 370 includes a plurality of layers, the first portion 911 and the second portion 912 may be disposed on the same layer or may be disposed on layers different from each other, respectively.

According to an embodiment, a main processor (e.g., the main processor 121 of FIG. 1) may be disposed on the first printed circuit board 351. The main processor 121 may be operatively connected to a flexible display (e.g., the flexible display 260 of FIG. 2A), a sub-display (e.g., the sub-display 266 of FIG. 2B), and a first camera module (e.g., the first camera module 271 of FIG. 1). The main processor 121 being operatively connected to the flexible display 260, the sub-display 266, and the first camera module 271 may mean that a control signal provided from the main processor 121 may be provided to the flexible display 260, the sub-display 266, and the first camera module 271 by being directly connected to the flexible display 260, the sub-display 266, and the first camera module 271 or indirectly connected through another component.

According to an embodiment, the main processor 121 may be disposed on the first printed circuit board 351 to be disposed close to the first camera module 271.

For example, when transmitting and/or receiving data with the main processor 121, a first camera may use a C-PHY or a D-PHY, which are a physical layer interface of a mobile industry processor interface (MIPI) for communication. As a performance (e.g., resolution) of the first camera module 271 increases, a communication performance required for image data or video data transmitted from the first camera module 271 to the main processor 121 may also increase. For the communication performance, a data transmission speed of C-PHY and a data transmission speed of D-PHY may be increased, and thus high-resolution data may be transmitted at high speed. Since a data loss may increase in case that a transmission speed is high, high-resolution data transmission may be difficult, when a distance between the main processor 121 and the first camera module 271 is increased.

When the main processor 121 is disposed on the second printed circuit board 352 in the second housing part 220 or the third printed circuit board 353 in the third housing part 230, the high-resolution data transmitted from the first camera module 271 disposed in the first housing part 210 to the main processor 121 should be transmitted through the flexible printed circuit board 370. When the data is transmitted through the flexible printed circuit board 370, since high-speed transmission is difficult due to an increase in a channel loss, it may be difficult to provide the high-resolution data to the main processor 121. According to an embodiment, since the main processor 121 should be disposed close to the first camera module 271 for the high-resolution data transmission, the main processor 121 may be disposed in the first housing part 210 in which the first camera module 271 is disposed.

According to an embodiment, the foldable electronic device 101 may include first display driver integrated circuitry 921 configured to control the flexible display 260. The first display driver integrated circuitry 921 may be disposed in the second housing part 220.

According to an embodiment, the first display driver integrated circuitry 921 may be electrically connected to a rear side panel 931 of the flexible display 260. The rear side panel 931 may be disposed inside the second housing part 220 by bending to the inside of the second housing part 220 at a periphery of the second housing part 220 from a front panel. The first display driver integrated circuitry 921 may be electrically connected to the rear side panel 931 extending into the second housing part 220. Since the first display driver integrated circuitry 921 is disposed on the rear side panel 931, the present structure may be referred to as a chip on plastic (COP) structure. The first display driver integrated circuitry 921 may be electrically connected to the second printed circuit board 352 disposed in the second housing part 220. In case of the first housing part 210, since a space in which the COP structure may be disposed may be insufficient because the first camera module 271 is disposed inside the first housing part 210, the first display driver integrated circuitry 921 may be disposed in the second housing part 220.

According to an embodiment, the main processor 121 may be electrically connected to the first display driver integrated circuitry 921. For example, the main processor 121 may be electrically connected to the first display driver integrated circuitry 921 through the first printed circuit board 351, the second portion 912 of the flexible printed circuit board 370, and the second printed circuit board 352. The main processor 121 may transmit a signal for controlling the flexible display 260 to the first display driver integrated circuitry 921 through the first printed circuit board 351, the second portion 912 of the flexible printed circuit board 370, and the second printed circuit board 352. The first display driver integrated circuitry 921 may be configured to control the flexible display 260 based on the signal received from the main processor 121.

According to an embodiment, since the flexible printed circuit board 370 directly connects the first printed circuit board 351 and the second printed circuit board 352, a loss of the signal transmitted from the main processor 121 to the first display driving circuit 921 may be reduced. The signal provided from the main processor 121 may be transmitted from the first printed circuit board 351 to the third printed circuit board 353 through the second portion 912 of the flexible printed circuit board 370, and then may be provided to the first display driver integrated circuitry 921 through the third printed circuit board 353.

For example, a foldable electronic device 900 according to a comparative example illustrated in FIG. 9B may include a first flexible printed circuit board 941 electrically connecting the first printed circuit board 351 and the third printed circuit board 353 and a second flexible printed circuit board 942 electrically connecting the third printed circuit board 353 and the second printed circuit board 352. The first flexible printed circuit board 941 may include a first connector 951 connected to the first printed circuit board 351 and a second connector 952 connected to the third printed circuit board 353. The second flexible printed circuit board 942 may include a third connector 953 connected to the third printed circuit board 353 and a fourth connector 954 connected to the second printed circuit board 352.

In the foldable electronic device 900 according to a comparative example, when a signal is transmitted from the first printed circuit board 351 to the second printed circuit board 352, the signal may be transmitted to the third printed circuit board 353 through the first printed circuit board 351 and the first flexible printed circuit board 941. The signal transmitted to the third printed circuit board 353 may be transmitted to the second printed circuit board 352 through the second flexible printed circuit board 942. For example, when the main processor 121 transmits a signal for controlling the flexible display 260 to the first display driver integrated circuitry 921, the signal may be transmitted to the first display driver integrated circuitry 921 through the first printed circuit board 351, the first flexible printed circuit board 941, the third printed circuit board 353, the second flexible printed circuit board 942, and the second printed circuit board 352.

A first path of the signal transmitted from the main processor 121 to the first display driver integrated circuitry 921 in the foldable electronic device 101 according to an embodiment illustrated in FIG. 9A may be different from a second path of the signal transmitted from the main processor 121 to the first display driver integrated circuitry 921 in the foldable electronic device 900 according to a comparative example illustrated in FIG. 9B. Table 1 below indicates the first path and the second path.

**[Table 1]**

| | |
|---|---|
| First path | First printed circuit board 351 - First connector 901 - Flexible printed circuit board 370 - Third connector 903 - Second printed circuit board 352 - First display driver integrated circuitry 921 |
| Second path | First printed circuit board 351 - First connector 951 - First flexible printed circuit board 941 - Second connector 952 - Second printed circuit board 352 - Third connector 953 - Second flexible printed circuit board 942 - Fourth connector 954 - Second printed circuit board 352 - First display driver integrated circuitry 921 |

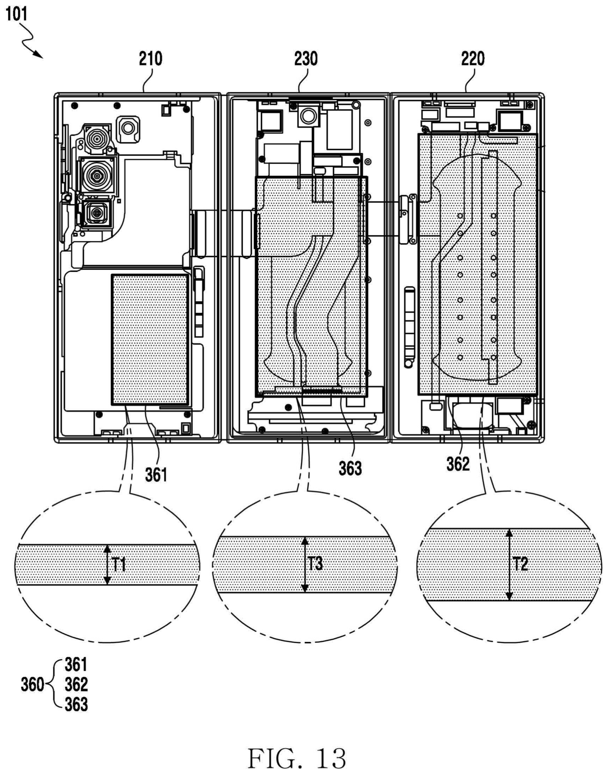

Referring to Table 1, since the first path is shorter than the second path, in case of the foldable electronic device 101 according to an embodiment, a structure for electrical connection between the first printed circuit board 351 and the second printed circuit board 352 may be simplified and a wiring length may be reduced. In case of the foldable electronic device 101 according to an embodiment, since the number of connectors may be reduced, the number of electronic components disposed on printed circuit boards 351, 352, and 353 may be increased, and since an internal space of the foldable housing 201 may be secured, a size of batteries (e.g., a plurality of batteries 360 of FIG. 13) may be increased. As a size of the battery increases, a charging capacity of the battery may increase, and thus in case of the foldable electronic device 101 according to an embodiment, a charging capacity may increase.

Referring again to FIG. 9A, the foldable electronic device 101 according to an embodiment may include second display driver integrated circuitry 922 configured to control the sub-display 266. Since a sub-display (e.g., the sub-display 266 of FIG. 2B) is disposed in the third housing part 230, the second display driver integrated circuitry 922 may be disposed in the third housing part 230. For example, the sub-display 266 may include a rear side panel extending from a lower periphery of the third housing part 230 into the inside of the third housing part 230, and the second display driver integrated circuitry 922 may be electrically connected to the rear side panel. The second display driver integrated circuitry 922 may be electrically connected to the third printed circuit board 353 in the third housing part 230 through another flexible printed circuit board 961 (e.g., a second flexible printed circuit board). According to an embodiment, a thickness of the first flexible printed circuit board 370 may be thicker than the other flexible printed circuit board 961 (e.g., the second flexible printed circuit board). According to an embodiment, the first flexible printed circuit board 370 may include more conductive layers than the other flexible printed circuit board 961 (e.g., the second flexible printed circuit board).

According to an embodiment, the main processor 121 may be configured to transmit a signal for controlling a cover display to the second display driver integrated circuitry 922. The main processor 121 may transmit the signal for controlling the cover display to the second display driver integrated circuitry 922 through the first printed circuit board 351, the first portion 911 of the flexible printed circuit board 370, the third printed circuit board 353, and the other flexible printed circuit board 961. The second display driver integrated circuitry 922 may be configured to control the sub-display 266 based on the signal received from the main processor 121.

According to an embodiment, the first housing part 210 may include a connector hole 290 to which a terminal of an external electronic device may be coupled. For example, a terminal of a charging device may be inserted into the connector hole 290. The foldable electronic device 101 may include a first sub-printed circuit board 355a disposed in the first housing part 210 and electrically connected to the first printed circuit board. The first sub-printed circuit board 355a may be electrically connected to the first printed circuit board 351 through a connection structure 962 (e.g., a flexible printed circuit board, a coaxial cable, and the like.). The first sub-printed circuit board 355a may include a receptacle 355b positioned to correspond to the connector hole 290 of the first housing part 210. When a terminal of an external electronic device is inserted into the connector hole 290, the terminal may be coupled to the receptacle 355b corresponding to the connector hole 290. For example, when the terminal of the charging device coupled to the receptacle 355b by being inserted into the connector hole 290, power provided from the charging device may be provided to power management circuitry disposed on the first printed circuit board 351 through the first sub-printed circuit board 355a electrically connected to the first sub-printed circuit board 355b including the receptacle 355b. The power provided from the charging device may be distributed to the batteries by the power management circuitry and may charge the batteries. When the connector hole 290 is disposed in the second housing part 220 or the third housing part 230 instead of the first housing part 210, a length of the connection structure 962 for transmitting power provided through the connector hole 290 to the first printed circuit board 351 may be increased. As the length of the connection structure 962 increases, a loss of the power may increase, and a space for accommodating the connection structure 962 may increase. According to an embodiment, as the connector hole 290 is formed in the first housing part 210 on which the first printed circuit board 351 is disposed, the length of the connection structure 962 may be reduced. Since the length of the connection structure 962 is reduced, the loss of the power may be reduced, and the space for accommodating the connection structure 962 may be reduced.

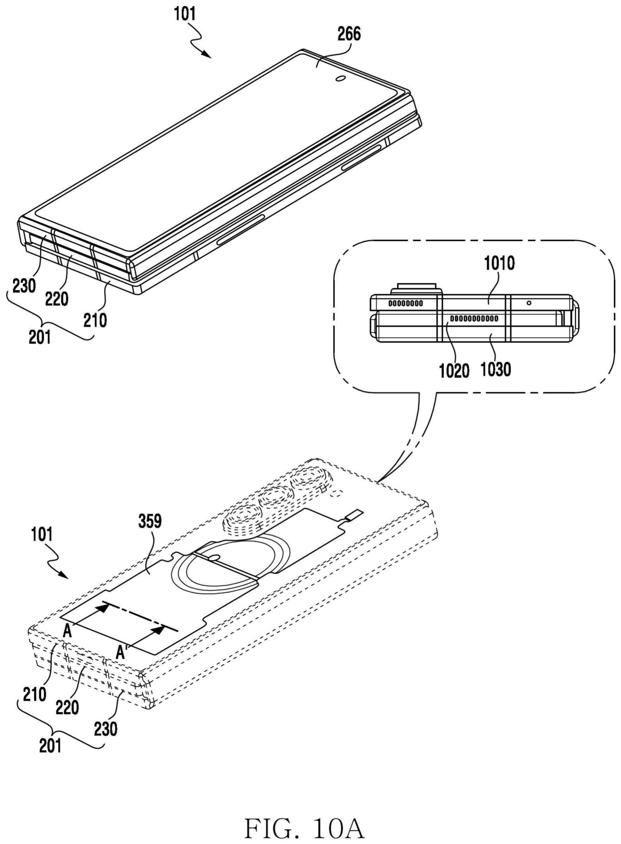

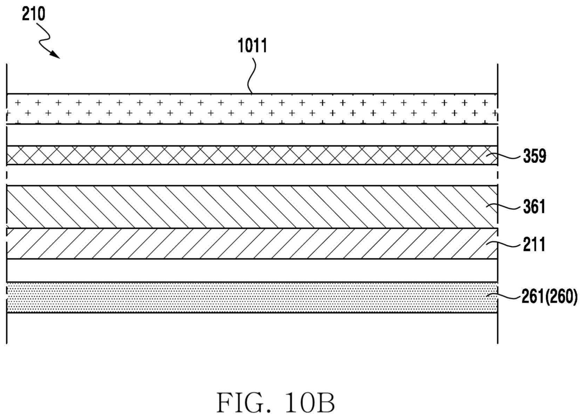

FIG. 10A illustrates a foldable electronic device including an antenna according to an embodiment. FIG. 10B is a cross-sectional view of a first housing part of FIG. 10A cut along line A-A'.

Referring to FIG. 10A, a foldable electronic device 101 according to an embodiment may include an antenna 359 for near field communication (NFC). The antenna 359 may include a conductive pattern disposed to form a plurality of loops. The antenna 359 may be referred to as a loop antenna or a coil antenna.

According to an embodiment, the foldable electronic device 101 may perform an NFC operation by using the antenna 359. For example, at least one processor (e.g., the processor 120 of FIG. 1) may transmit a payment signal including payment information by using the antenna 359. The foldable electronic device 101 may generate a magnetic signal corresponding to the payment signal and transmit the generated magnetic signal to an external electronic device (e.g., a POS device). When the magnetic signal is detected by the external electronic device, magnetic card information corresponding to the payment information may be swiped by a reader of the external electronic device, and the payment information may be transmitted to an external server (e.g., a payment server). The external server may perform payment processing based on the payment information.

According to an embodiment, the antenna 359 may be disposed in a first housing part 210. When the antenna 359 is disposed in a third housing part 230, since the third housing part 230 is covered by the first housing part 210 and a second housing part 220 in a third state, transmission and/or reception of a signal through the antenna 359 may be difficult. When the antenna 359 is disposed in the second housing part 220, the antenna 359 may overlap a sub-display 266 disposed in the second housing part 220. The antenna 359 may be disposed close to a rear side of a foldable housing 201, by having a relatively large area. When the antenna 359 is disposed in the second housing part 220, since the sub-display 266 and the antenna 359 are adjacent, a radiation performance of the antenna 359 may be deteriorated by a conductive material in the sub-display 266. As the conductive material shield an electromagnetic field formed by the antenna 359 or interfere with the electromagnetic field, the radiation performance of the antenna 359 may be deteriorated. Due to the conditions, the antenna 359 may be disposed in the first housing part 210 among the first housing part 210, the second housing part 220, and the third housing part 230.

Referring to FIG. 10A, the foldable housing 201 may include conductive portions defining an upper periphery. For example, the conductive portions may include a first conductive portion 1010 forming at least a portion of an upper periphery of the first housing part 210, a second conductive portion 1020 forming at least a portion of an upper periphery of the second housing part 220, and/or a third conductive portion 1030 forming at least a portion of an upper periphery of the third housing part 230. At least one of the conductive portions may operate as a radiator for communication with an external electronic device. When a signal provided from a main processor 121 is fed to a feed point of conductive portions 1010, 1020, and 1030, the signal may be radiated to the outside of the foldable electronic device 101 through the conductive portions. A signal transmitted by the external electronic device may be received through the conductive portions and provided to at least one processor.

According to an embodiment, the at least one of the conductive portions may be electrically connected to the antenna 359 (e.g., an NFC antenna) to operate as a portion of the antenna 359. The at least one of the conductive portions may be electrically connected to the antenna 359 through the flexible printed circuit board 370 of FIG. 9A. For NFC, a user may bring a rear side of the first housing part 210 close to the external electronic device, or the at least one of the conductive portions close to the external electronic device. For example, in case that the second conductive portion 1020 (or the third conductive portion 1030) is electrically connected to the antenna 359 and operates as a portion of the antenna 359, the second conductive portion 1020 (or the third conductive portion 1030) may transmit and/or receive a signal for the NFC, when the second conductive portion 1020 (or the third conductive portion 1030) is adjacent to the external electronic device.

Referring to FIG. 10B, the antenna 359 may at least partially overlap a first battery 361 disposed in the first housing part (e.g., the first housing part 210 of FIG. 10A). According to an embodiment, the antenna 359 may be disposed between a rear side 1011 of the first housing part 210 and the first battery 361. The first battery 361 may be supported by a first support portion 212. The rear side 1011 of the first housing part 210 may be opposite to a first plane area 261 of a flexible display 260 corresponding to the first housing part 210. When the first battery 361 is disposed between the antenna 359 and the rear side 1011, a signal radiated from the antenna 359 may be difficult to be transmitted to the external electronic device, by being blocked by the first battery 361. When the foldable electronic device 101 is in the third state, as the antenna 359 is disposed closer to the rear side 1011 than the first battery 361, the signal radiated from the antenna 359 may be transmitted to the external electronic device through the rear side 1011.

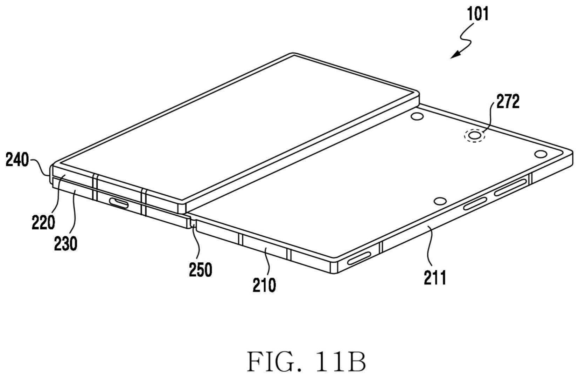

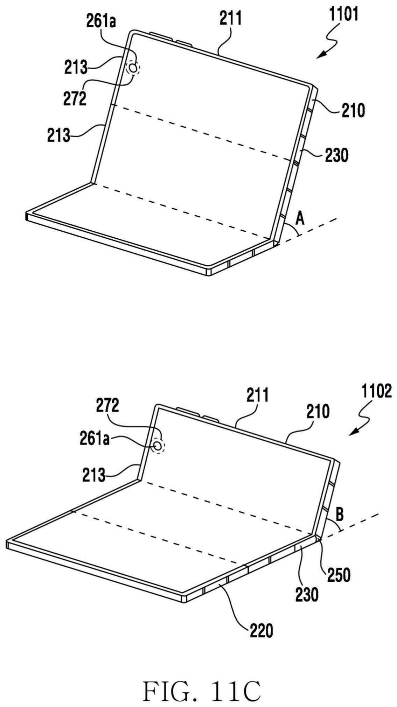

FIG. 11A illustrates a foldable electronic device according to an embodiment in a first state. FIG. 11B illustrates a foldable electronic device according to an embodiment in a second state. FIG. 11C illustrates a foldable electronic device according to an embodiment in a free stop state.

Referring to FIG. 11A, a foldable electronic device 101 according to an embodiment may include a second camera module (e.g., the second camera module 272 of FIG. 3B). The second camera module 272 may be opposite to a first camera module (e.g., the first camera module 271 of FIG. 2A). For example, a direction in which the second camera module 272 faces and a direction in which the first camera module 271 faces may be opposite to each other. The first camera module 271 may be referred to as a rear side camera, and the second camera module 272 may be referred to as a front side camera. The first camera module 271 may shoot a rear of the foldable electronic device 101, and the second camera module 272 may shoot a front of the foldable electronic device 101.

According to an embodiment, the second camera module 272 may be disposed in a first housing part 210. As described above, the first camera module 271 may be disposed in the first housing part 210 to face a rear side of the first housing part 210. When a flexible display 260 is in use, the second camera module 272 may be disposed in the first housing part 210 to face a front side of the first housing part 210 in order to shoot a direction in which the flexible display 260 faces.

As illustrated in FIG. 11A, when the foldable electronic device 101 is in a first state, the second camera module 272 may shoot an image or a video in an opposite direction to the first camera module 271, even when the second camera module 272 is disposed in a second housing part 220 or a third housing part 230 instead of the first housing part 210. For example, when the second state and a third state of the foldable electronic device 101 are not considered, the second camera module 272 may be disposed in the second housing part 220 or the third housing part 230 instead of the first housing part 210.

Referring to FIG. 11B, the foldable electronic device 101 may be used in the second state. In the second state, the second housing part 220 may overlap the third housing part 230. When the second camera module 272 is disposed in the second housing part 220 or the third housing part 230, as the second camera module 272 is covered in the second state, the second camera module 272 may not be used. The second camera module 272 may be disposed in the first housing part 210, in order to use the second camera module 272 in the second state.

Referring to FIG. 11C, the foldable electronic device 101 may be used in the free stop state. The free stop state may be referred to as a state in which a portion of the foldable housing 201 is maintained in a folded state by the first hinge assembly 240 or the second hinge assembly 250 providing torque. The free stop state may be referred to as a flex state. Referring to a first free stop state 1101 of FIG. 11C, the first free stop state 1101 may be referred to as a state in which the second housing part 220 maintains a partially rotated state with respect to the third housing part 230. In the first free stop state 1101, the second housing part 220 may be placed on a floor, and the third housing part 230 and the first housing part 210 may maintain a certain angle A with respect to the floor. Referring to a second free stop state 1102 of FIG. 11C, the second free stop state 1102 may be referred to as a state in which the first housing part 210 maintains a partially rotated state with respect to the third housing part 230. In the second free stop state 1102, the second housing part 220 and the third housing part 230 may be placed on the floor, and the first housing part 210 may maintain a certain angle B with respect to the floor. In addition, various free stop states may be possible.

Referring to FIG. 11C, when the second camera module 272 is disposed in the second housing part 220, in the first free stop state 1101, the second camera module 272 may be difficult to shoot a front of the foldable electronic device 101, by facing a ceiling (e.g., facing a +z direction). When the second camera module 272 is disposed in the second housing part 220 or the third housing part 230, in the second free stop state 1102, the second camera module 272 may be difficult to shoot the front of the foldable electronic device 101, by facing the ceiling. Although not illustrated in FIG. 11C, as described with reference to FIG. 9A, since first display driver integrated circuitry 921 for the flexible display 260 is disposed in the second housing part 220, a space for disposing the second camera module 272 in the second housing part 220 may be insufficient. In the free stop state, the second camera module 272 may be disposed in the first housing part 210 such that the first camera module 271 may shoot the front of the foldable electronic device 101.

According to an embodiment, the first camera module 271 may be disposed at a position close to a center of an upper edge portion 213 of the first housing part 210, in the first housing part 210. The second camera module 272 may collect light reflected from a subject through a through hole 261a penetrating the flexible display 260. Since a portion of the flexible display 260 in which the through hole 261a is formed may not display visual information, the portion may be formed close to a periphery of the flexible display 260. Since the second camera module 272 may not be disposed in a space in which the first hinge assembly 240 and the second hinge assembly 250 are disposed, it may be difficult to be disposed adjacent to the first hinge assembly 240 and the second hinge assembly 250. When the first camera module 271 is disposed close to a side edge portion (e.g., an edge portion 211) of the first housing part 210, the second camera module 272 may be covered by a hand of a user pressing a key button module 280. In the first housing part 210, at a position close to the second hinge assembly 250, a space for disposing the second camera module 272 may be insufficient due to the second hinge assembly 250. According to an embodiment, the second camera module 272 may be disposed at the position close to the center of the upper edge portion 213 of the first housing part 210, in the first housing part 210.

Referring again to FIG. 5B, the foldable electronic device 101 according to an embodiment may include a third camera module 273. The third camera module 273 may overlap a sub-display 266. For example, the third camera module 273 may be disposed in the third housing part 230 in a direction in which the sub-display 266 faces. Since the third camera module 273 is disposed in the third housing part 230, a space for disposing the second camera module 272 in the third housing part 230 may be insufficient. As described above, when considering a disposition space and a usage state, the second camera module 272 may be disposed in the first housing part 210.

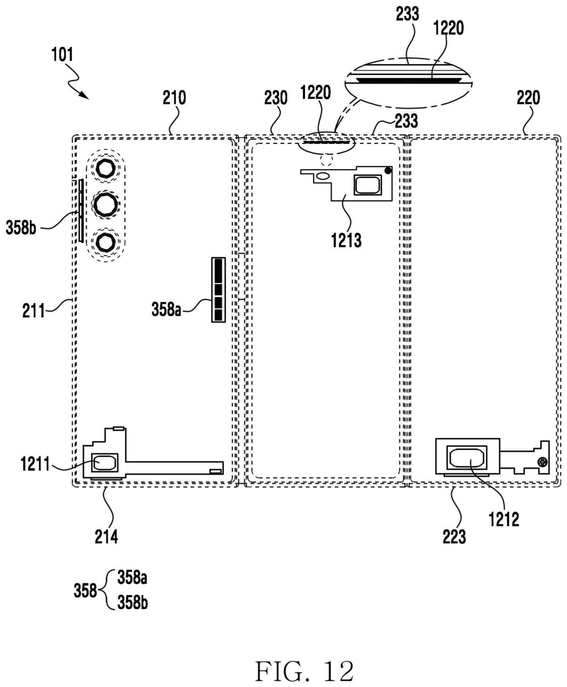

FIG. 12 illustrates a rear side of a foldable electronic device according to an embodiment.

Referring to FIG. 12, a foldable electronic device 101 according to an embodiment may include a plurality of speakers. The plurality of speakers may be configured to emit an audio signal based on a signal received from at least one processor (e.g., the processor 120 of FIG. 1).

According to an embodiment, the plurality of speakers may include a first speaker 1211, a second speaker 1212, and a third speaker 1213. The first speaker 1211 may be disposed in a first housing part 210. The second speaker 1212 may be disposed in a second housing part 220. The third speaker 1213 may be disposed in a third housing part 230.

According to an embodiment, the foldable electronic device 101 may include a receiver hole 1220 for a phone call. The receiver hole 1220 may be implemented in a notch shape formed in a rear side of the third housing part 230. When a user has a phone call using the foldable electronic device 101 of a third state, a sub-display 266 may use the foldable electronic device 101 in a posture facing an ear of the user. The receiver hole 1220 may be formed in the rear side of the third housing part 230 to correspond to a direction in which the sub-display 266 faces such that a call sound may be transmitted to the user. For example, the receiver hole 1220 may be adjacent to an upper edge 233 of the third housing part 230.

According to an embodiment, the third speaker 1213 disposed in the third housing part 230 may be disposed adjacent to the upper edge 233 of the third housing part 230 in the third housing part 230. Since a speaker hole is adjacent to the upper edge 233 of the third housing part 230, the third speaker 1213 may be disposed adjacent to the upper edge 233 so that a call sound emitted from the third speaker 1213 is easily transmitted to the user.

As illustrated in FIG. 12, the first speaker 1211 may be disposed adjacent to a lower edge portion 214 of the first housing part 210, and the second speaker 1212 may be disposed adjacent to a lower edge portion 223 of the second housing part 220. A position of the first speaker 1211 and the second speaker 1212 illustrated in FIG. 12 are exemplary, but the embodiment is not limited thereto.

According to an embodiment, the foldable electronic device 101 may include at least one antenna module 358. The at least one antenna module 358 may be referred to as a millimeter wave (mmWave) module including a substrate and a plurality of patch antennas (e.g., an array antenna) disposed on a substrate. The at least one antenna module 358 may transmit and/or receive a signal in an ultra-high frequency band in which a wavelength of a frequency is in millimeters. The plurality of patch antennas may form a directional beam to transmit and/or receive the signal in the ultra-high frequency band.

According to an embodiment, a main processor 121 disposed on a first printed circuit board 351 may be configured to communicate with an external electronic device by using the at least one antenna module 358. The at least one antenna module 358 may be electrically connected to the main processor 121 disposed on the first printed circuit board 351 in the first housing part 210.

For example, the main processor 121 may generate a baseband signal. The baseband signal may be up-converted to a signal of a designated frequency band through radio frequency integrated circuitry (RFIC). The up-converted signal may be filtered through an RF front end (RFFE) module and radiated to the outside of an electronic device through the at least one antenna module 358. For example, a signal received from the external electronic device through the at least one antenna module 358 may be preprocessed through the RFFE. The RFIC may downconvert a preprocessed radio signal to a baseband signal such that the preprocessed radio signal may be processed by the main processor 121. The down-converted signal may be provided to the main processor 121 disposed on the first printed circuit board 351.

According to an embodiment, the at least one antenna module 358 may be disposed in the first housing part 210. As described above, since the at least one antenna module 358 is electrically connected to the main processor 121 disposed on the first printed circuit board 351, when the at least one antenna module 358 is disposed in the second housing part 220 or the third housing part 230, a signal loss between the main processor 121 and the at least one antenna module 358 may increase, and a structure for an electrical connection may be required. The at least one antenna module 358 may be disposed in the first housing part 210 to reduce the signal loss and the structure for the electrical connection. Since the at least one antenna module 358 disposed in the first housing part 210 may be positioned close to the first printed circuit board 351, an electrical connection between the at least one antenna module 358 and the main processor 121 may be facilitated.

According to an embodiment, the at least one antenna module 358 may include a first antenna module 358a and/or a second antenna module 358b, but is not limited thereto. The first antenna module 358a may be configured to radiate RF signals toward a rear side of the first housing part 210 by being disposed to face the rear side of the first housing part 210. The second antenna module 358b may be configured to radiate RF signals toward an edge portion 211 by being disposed to face the edge portion 211 of the first housing part 210.

FIG. 13 illustrates batteries of a foldable electronic device according to an embodiment.

Referring to FIG. 13, a foldable electronic device 101 according to an embodiment may include a plurality of batteries 360. The plurality of batteries 360 may include a first battery 361 disposed in a first housing part 210, a second battery 362 disposed in a second housing part 220, and a third battery 363 disposed in a third housing part 230.

According to an embodiment, sizes and thicknesses of the first battery 361, the second battery 362, and the third battery 363 may be different from each other. In case of the first housing part 210, since the relatively large number of electronic components are disposed, a space for accommodating the first battery 361 may be relatively small. In case of the second housing part 220, since the relatively small number of electronic components are disposed, a space for accommodating the second battery 362 may be relatively large. Since a size and a thickness of a battery may affect a capacity of the battery, capacities of the plurality of batteries 360 may be different respectively based on a size and a thickness of the batteries.

According to an embodiment, the second battery 362 may have a larger size and a thicker thickness than the first battery 361 and the third battery 363, and the first battery 361 may have a smaller size and a thinner thickness than the second battery 362 and the third battery 363. For example, a first size of the first battery 361 may be smaller than a second size of the second battery 362 and a third size of the third battery 363. The second size may be larger than the first size and the third size. According to an embodiment, the third size may be smaller than the second size and larger than the first size. For example, a first thickness T1 of the first battery 361 may be thinner than a second thickness T2 of the second battery 362 and a third thickness T3 of the third battery 363. The second thickness T2 may be thicker than the first thickness T1 and the third thickness T3. According to an embodiment, the third thickness T3 may be thinner than the second thickness T2 and thicker than the first thickness T1.

A foldable electronic device 101 is provided. The foldable electronic device 101 comprises a foldable housing 201. The foldable housing 201 includes a first housing part 210, a second housing part 220, and a third housing part 230 disposed between the first housing part 210 and the second housing part 220. The foldable electronic device 101 comprises a first hinge assembly 240 rotatably coupling the second housing part 220 to the third housing part 230. The foldable electronic device 101 comprises a second hinge assembly 250 rotatably coupling the first housing part 210 and the third housing part 230 and having a wider width than the first hinge assembly 240. The foldable electronic device 101 comprises a first display (e.g., the flexible display 260) disposed across the first housing part 210, the second housing part 220, and the third housing part 230. The foldable electronic device 101 comprises a second display (e.g., the sub-display 266) disposed in the third housing part 230 and opposite to the first display 260. The foldable electronic device 101 comprises a first camera module 271 disposed in a rear side of the first housing part 210 and including image processing circuitry. The foldable electronic device 101 comprises a key button module 280 including processing circuitry and at least one key button. The at least one key button may be disposed at a side wall (e.g., the edge portion 211) of the first housing part 210. The foldable electronic device 101 comprises a first printed circuit board 351 disposed in the first housing part 210. A folded state of the foldable electronic device is a state in which a front side of the third housing part 230 faces a front side of the second housing part 220 and a front side of the first housing part 210 faces a rear side of the second housing part 220. Since the camera module 271 and the key button module 280 are included in the first housing part 210, the usability of the foldable electronic device 101 may be improved compared to other deployments of these components.

According to an embodiment, the first camera module 271 may include a deco 271b at least partially exposed through the rear side of the first housing part. The first camera module 271 may be positioned closer to the sidewall (e.g., the edge portion) of the first housing part 210 than the second hinge assembly 250 in the first housing part 210.

According to an embodiment, the first camera module 271 may be disposed adjacent to the upper edge portion of the first housing part 210 in the first housing part 210.

According to an embodiment, the foldable electronic device 101 may comprise a main processor 121 disposed on the first PCB 351 and operatively connected to the first display 260, the second display 266, and the first camera module 271. The foldable electronic device 101 may comprise a second PCB 352 disposed in the second housing part 220. The foldable electronic device 101 may comprise a third PCB 353 disposed in the third housing part 230. The foldable electronic device 101 may comprise a flexible printed circuit board 370 electrically connecting the second PCB 352 and the third PCB 353 to the first PCB 351. The FPCB 370 may include a first portion 911 electrically connecting the first PCB 351 to the second PCB 352 and a second portion 912 electrically connecting the first PCB 351 to the third PCB 353.

According to an embodiment, the foldable electronic device 101 may further comprise first display driver integrated circuitry (DDI) 921 disposed in the second housing part 220, electrically connected to the second PCB 352, and configured to control the first display 260. The main processor 121 may be electrically connected to the first DDI 921, via the first PCB 351, the second portion 912 of the FPCB 370, and the second PCB 352.

According to an embodiment, the foldable electronic device 101 may comprise second DDI 922 disposed in the third housing part 230 and configured to control the second display 266. The foldable electronic device 101 may comprise another FPCB 961 electrically connecting the second DDI 922 to the third PCB 353 in the third housing part 230. The main processor 121 may be electrically connected to the second DDI 922, via the first PCB 351, the first portion 911 of the FPCB 370, the third PCB 353, and the other FPCB 961.

According to an embodiment, the foldable electronic device 101 may further comprise at least one antenna module 358 (e.g., an antenna module 197 of FIG. 1) disposed in the first housing part 210. The at least one antenna module 358 may be configured to radiate radio frequency (RF) signals toward the edge portion of the first housing part 210 or the rear side of the first housing part 210.

According to an embodiment, the foldable electronic device 101 may comprise a first battery 361 disposed in the first housing part 210. The foldable electronic device 101 may comprise a second battery 362 disposed in the second housing part 220. The foldable electronic device 101 may comprise a third battery 363 disposed in the third housing part 230. A third size of the third battery 363 may be larger than a first size of the first battery 361 and smaller than a second size of the second battery 362.

According to an embodiment, a third thickness T3 of the third battery 363 may be thicker than a first thickness T1 of the first battery 361 and thinner than a second thickness T2 of the second battery 362.

According to an embodiment, the foldable electronic device 101 may further comprise an antenna 359 (e.g., an antenna module of FIG. 1 197) for near field communication (NFC) disposed between the first battery 361 and the rear side of the first housing part 210.

According to an embodiment, the foldable electronic device 101 may comprise a first speaker 1211 disposed in the first housing part 210. The foldable electronic device 101 may comprise a second speaker 1212 disposed in the second housing part 220. The foldable electronic device 101 may comprise a third speaker 1213 disposed adjacent to an upper edge portion of the third housing part 230 in the third housing part 230.

According to an embodiment, the first housing part 210 may further comprise a connector hole 290 coupled with a terminal of an external electronic device and electrically connected to the first PCB 351.

According to an embodiment, the foldable electronic device 101 may comprise a second camera module 272 facing in a direction opposite to a direction of the first camera module 271. The second camera module 272 may be disposed in the first housing part 210 among the first housing part 210, the second housing part 220, and the third housing part 230.

According to an embodiment, the foldable electronic device 101 may comprise a third camera module 273 disposed in the third housing part 230 and facing a direction of the second display 266.

According to an embodiment, the first hinge assembly 240 and the second hinge assembly 250 may be configured to provide a state in which the first housing part 210, the second housing part 220, and the third housing part 230 are unfolded, an intermediate state in which the front side of the third housing part 230 faces the front side of the second housing part 220, by rotating the second housing part 220 in a first rotating direction with respect to the third housing part 230 in the unfolded state, and the folded state in which the front side of the first housing part 210 faces the rear side of the second housing part 220, by rotating the first housing part 210 in a second rotating direction opposite to the first rotating direction with respect to the third housing part 230 in the intermediate state.

A foldable electronic device 101 is provided. The foldable electronic device 101 may comprise a foldable housing 201. The foldable housing 201 may include a first housing part 210, a second housing part 220, and a third housing part 230 disposed between the first housing part 210 and the second housing part 220. The foldable electronic device 101 may comprise a first hinge assembly 240 rotatably coupling the second housing part 220 to the third housing part 230. The foldable electronic device 101 may comprise a second hinge assembly 250 rotatably coupling the first housing part 210 to the third housing part 230 and having a wider width than the first hinge assembly 240. The foldable electronic device 101 may comprise a flexible display 260 disposed in the first housing part 210, the second housing part 220, and the third housing part 230. The foldable electronic device 101 may comprise a sub-display 266 disposed in the third housing part 230 and opposite to the flexible display 260. The foldable electronic device 101 may comprise a first camera module 271 including a deco 271b partially exposed through a rear side of the first housing part 210 and disposed in the first housing part 210. The foldable electronic device 101 may comprise a main processor 121 disposed in the first housing part 210 and operatively coupled to the flexible display 260, the sub-display 266, and the first camera module 271. The foldable electronic device 101 may comprise a first battery 361 disposed in the first housing part 210. The foldable electronic device 101 may comprise a second battery 362 disposed in the second housing part 220. The foldable electronic device 101 may comprise a third battery 363 disposed in the third housing part 230. A third size of the third battery 363 may be larger than a first size of the first battery 361 and smaller than a second size of the second battery 362.

According to an embodiment, the foldable electronic device 101 may comprise a first printed circuit board 351 disposed in the first housing part 210. The foldable electronic device 101 mya comprise a second PCB 352 disposed in the second housing part 220. The foldable electronic device 101 may comprise a third PCB 353 disposed in the third housing part 230. The foldable electronic device 101 may comprise a flexible printed circuit board 370 electrically connecting the second PCB 352 and the third PCB 353 to the first PCB 351. The FPCB 370 may include a first portion 911 electrically connecting the first PCB 351 to the second PCB 352 and a second portion 912 electrically connecting the first PCB 351 to the third PCB 353.

According to an embodiment, the foldable electronic device 101 may further comprise first display driver integrated circuitry (DDI) 921 disposed in the second housing part 220, electrically connected to the second PCB 352, and configured to control the flexible display 260. The main processor 121 may be electrically connected to the first DDI 921, via the first PCB 351, the second portion 912 of the FPCB 370, and the second PCB 352.

According to an embodiment, the foldable electronic device 101 may comprise second DDI 922 disposed in the third housing part 230 and configured to control the sub-display 266. The foldable electronic device 101 may comprise another FPCB 961 electrically connecting the second DDI 922 to the third PCB 353 in the third housing part 230. The main processor 121 may be electrically connected to the second DDI 922, via the first PCB 351, the first portion 911 of the FPCB 370, the third PCB 353, and the other FPCB 961.

According to an embodiment, the foldable electronic device 101 may comprise a second camera module 272 facing in a direction opposite to a direction of the first camera module 271. The second camera module 272 may be disposed in the first housing part 210 among the first housing part 210, the second housing part 220, and the third housing part 230.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (101) comprising:
a foldable housing (201) including:
a first housing part (210),
a second housing part (220), and
a third housing part (230) disposed between the first housing part (210) and the second housing part (220);
a first hinge assembly (240) rotatably coupling the second housing part (220) to the third housing part (230);
a second hinge assembly (250) rotatably coupling the first housing part (210) to the third housing part (230) and having a wider width than the first hinge assembly (240);
a first display (260) disposed across the first housing part (210), the second housing part (220), and the third housing part (230);
a second display (266) disposed in the third housing part (230) and opposite to the first display (260);
a first camera module (271) disposed in a rear side (1011) of the first housing part (210) and including image processing circuitry;
a key button module (280) including processing circuitry and at least one key button, wherein the at least one key button is disposed at a side wall of the first housing part (210); and
a first printed circuit board, PCB, (351) disposed in the first housing part (210), and
wherein a folded state of the foldable electronic device (101) is a state in which a front side of the third housing part (230) faces a front side of the second housing part (220) and a front side of the first housing part (210) faces a rear side of the second housing part (220).

2. The foldable electronic device (101) of claim 1,
wherein the first camera module (271) includes a deco (271b) at least partially exposed through the rear side (1011) of the first housing part (210) and is positioned closer to the sidewall of the first housing part (210) than the second hinge assembly (250) in the first housing part (210).

3. The foldable electronic device (101) of claim 1 or 2,
wherein the first camera module (271) is disposed adjacent to an upper edge portion (213) of the first housing part (210) in the first housing part (210).

4. The foldable electronic device (101) of any one of claim 1 to claim 3, further comprising:
a main processor (121) disposed on the first PCB (351) and operatively connected to the first display (260), the second display (266), and the first camera module (271),
a second PCB (352) disposed in the second housing part (220);
a third PCB (353) disposed in the third housing part (230); and
a flexible printed circuit board, FPCB, (370) electrically connecting the second PCB (352) and the third PCB (353) to the first PCB (351), and
wherein the FPCB (370) includes:
a first portion (911) electrically connecting the first PCB (351) to the second PCB (352), and
a second portion (912) electrically connecting the first PCB (351) to the third PCB (353).

5. The foldable electronic device (101) of claim 4, further comprising first display (260) driver integrated circuitry, DDI, (921) disposed in the second housing part (220), electrically connected to the second PCB (352), and configured to control the first display (260), and
wherein the main processor (121) is electrically connected to the first DDI (921), via the first PCB (351), the second portion (912) of the FPCB (370), and the second PCB (352).

6. The foldable electronic device (101) of claim 4 or claim 5, further comprising:
second DDI (922) disposed in the third housing part (230) and configured to control the second display (266); and
another FPCB (961) electrically connecting the second DDI (922) to the third PCB (353) in the third housing part (230), and
wherein the main processor (121) is electrically connected to the second DDI (922), via the first PCB (351), the first portion (911) of the FPCB(370), the third PCB (353), and the other FPCB.

7. The foldable electronic device (101) of any one of claim 1 to claim 6, further comprising at least one antenna module (358) disposed in the first housing part (210), and
wherein the at least one antenna module (358) is configured to radiate radio frequency, RF, signals toward an edge portion (221) of the first housing part (210) or the rear side (1011) of the first housing part (210).

8. The foldable electronic device (101) of any one of claim 1 to claim 7, further comprising:
a first battery (361) disposed in the first housing part (210);
a second battery (362) disposed in the second housing part (220); and
a third battery (363) disposed in the third housing part (230); and
wherein a third size of the third battery (363) is larger than a first size of the first battery (361) and smaller than a second size of the second battery (362).

9. The foldable electronic device (101) of claim 8,
wherein a third thickness of the third battery (363) is thicker than a first thickness of the first battery (361) and thinner than a second thickness of the second battery (362).

10. The foldable electronic device (101) of any one of claim 8 or claim 9, further comprising an antenna (359) for near field communication, NFC, disposed between the first battery (361) and the rear side (1011) of the first housing part (210).

11. The foldable electronic device (101) of any one of claim 1 to claim 10,
a first speaker (1211) disposed in the first housing part (210);
a second speaker (1212) disposed in the second housing part (220); and
a third speaker (1213) disposed adjacent to an upper edge portion (213) of the third housing part (230) in the third housing part (230).

12. The foldable electronic device (101) of any one of claim 1 to claim 11,
wherein the first housing part (210) includes a connector hole (290) coupled with a terminal of an external electronic device (102, 104) and electrically connected to the first PCB (351).

13. The foldable electronic device (101) of any one of claim 1 to claim 12, further comprising a second camera module (272) facing in a direction opposite to a direction of the first camera module (271), and
wherein the second camera module (272) is disposed in the first housing part (210) among the first housing part (210), the second housing part (220), and the third housing part (230).

14. The foldable electronic device (101) of any one of claim 1 to claim 13, further comprising a third camera module (273) disposed in the third housing part (230) and facing a direction of the second display (266).

15. The foldable electronic device (101) of any one of claim 1 to claim 14,
wherein the first hinge assembly (240) and the second hinge assembly (250) are configured to provide:
an unfolded state in which the first housing part (210), the second housing part (220), and the third housing part (230) are unfolded,
an intermediate state in which the front side of the third housing part (230) faces the front side of the second housing part (220), by rotating the second housing part (220) in a first rotating direction with respect to the third housing part (230) in the unfolded state, and
the folded state in which the front side of the first housing part (210) faces the rear side of the second housing part (220), by rotating the first housing part (210) in a second rotating direction opposite to the first rotating direction with respect to the third housing part (230) in the intermediate state.
